# EUROPÄISCHE PATENTANMELDUNG

(11) **EP 4 703 941 A1**
(43) Veröffentlichungstag der Anmeldung: **04.03.2026**
(21) Anmeldenummer: 25199960.3
(22) Anmeldetag: 03.09.2025
(51) Int. Cl.: G06F 21/60, H04L 9/08, H04L 9/32

(54) **SYSTEM, VERFAHREN UND COMPUTERPROGRAMMPRODUKT ZUR SICHEREN KOMMUNIKATION ZWISCHEN ZWEI AKTEUREN**

(30) Priorität: 03.09.2024 EP 24198236
(71) Anmelder: KAPRION Technologies GmbH, 01217 Dresden (DE)
(72) Erfinder: RÖDER, André, 01217 Dresden (DE); RÖDER, Klaus, 01217 Dresden (DE); EHRLICH, Tobias, 01217 Dresden (DE)
(74) Vertreter: Kailuweit & Uhlemann Patentanwälte Partnerschaft mbB

(57) **Zusammenfassung**

Die Erfindung betrifft ein System, aufweisend mindestens ein ID-Wallet (Software zur Verwaltung digitaler Identitäten und prüfbarer digitaler Nachweise) und mindestens ein Hardware-Sicherheitsmodul (HSM), zum sicheren, authentisierten Austausch digitaler Nachweise zwischen zwei Akteuren eines gemeinsamen digitalen Identitäts-Ökosystems, sowie ein Verfahren und ein Computerprogrammprodukt zur sicheren, authentisierten Kommunikation zwischen zwei solcher Systeme zur Ausstellung, Übertragung, Entgegennahme, Nachweiserbringung über die Inhaberschaft und Prüfung selbiger von digitalen Nachweisen.

## Beschreibung

Die Erfindung betrifft ein System, aufweisend mindestens ein ID-Wallet (digitale Identitäts-Brieftaschen) und mindestens ein Hardware-Sicherheitsmodul (HSM), zum sicheren Austausch digitaler Nachweise zwischen zwei Akteuren eines gemeinsamen digitalen ID-Ökosystems, sowie ein Verfahren und ein Computerprogrammprodukt zur sicheren Kommunikation zwischen zwei solcher Systeme zur Verwaltung von digitalen Nachweisen.

Aufgrund des weltweiten Anstiegs des Durchschnittsalters und somit des nicht-werktätigen Anteils der Gesamtbevölkerung steigt der Bedarf an Automatisierung und damit einhergehender Digitalisierung in nahezu allen Wirtschafts- und Gesellschaftsbereichen, einschließlich den Bereichen der Verwaltung und der staatlichen und zwischenstaatlichen Behörden.

Eine Digitalisierung der Verwaltung erfordert sichere digitale Identitäten, die nicht kopierbar sind. Digitale Identitäten sind in Computersystemen gespeicherte Daten, die sich auf Personen, Organisationen, Anwendungen oder Geräte beziehen. Für Personen können sie die personenbezogenen Daten, die zur Bestätigung der jeweiligen eigenen Identität und für die Verwaltung der Interaktionen zwischen verschiedenen Parteien durch digitale Systeme notwendig sind, umfassen.

Ferner sind Verfahren erforderlich, die das Ausstellen, das sichere Überprüfen, das Übertragen und das Verwalten im Allgemeinen von digitalen Nachweisen ermöglichen und sicherstellen, dass diese nicht beliebig kopiert werden können.

Aus dem Stand der Technik sind Verfahren zur Verwaltung digitaler Identitäten und digitaler Nachweise bekannt.

Ein ID-Wallet ist eine Software zur Verwaltung überprüfbarer digitaler Nachweise in Kombination mit einem der Software zugeordneten und von der Software verwalteten, zur Speicherung von digitalen Nachweisen bestimmter Speicherbereich auf der Hardware, auf der die Software läuft.

Ein überprüfbarer digitaler Nachweis ist ein digitaler Nachweis, der von seinem Aussteller mit Information versehen ist, die es einem Prüfer erlaubt, bestimmte Attribute eines digitalen Nachweises zu überprüfen. So kann anhand einer digitalen Signatur des Ausstellers, die ein digitaler Nachweis aufweist, die Identität des Ausstellers überprüft werden. Anhand eines kryptographischen Hashs (eines kryptographischen Streuwertes), den ein digitaler Nachweis aufweist, kann die Authentizität des digitalen Nachweises geprüft werden. Ferner kann ein digitaler Nachweis mit einem Identifikator des Inhabers versehen werden, der es einem Prüfer erlaubt, festzustellen, an wen der Nachweis herausgegeben wurde.

Durch Abgleich mit verschiedenen zentralen und/oder dezentralen Vertrauensregistern können mittels eines ID-Wallets weitere Attribute des Nachweises überprüft werden.

Durch Abgleich mit einem Gültigkeitsregister, kann ein ID-Wallet eines Prüfers prüfen, ob ein digitaler Nachweis gültig ist. Ein Register der Schemata der überprüfbaren Nachweise erlaubt es dem ID-Wallet des Prüfers festzustellen, ob das Schema des digitalen Nachweises korrekt ist. Ob ein Aussteller berechtigt war, einen digitalen Nachweis auszustellen, kann das ID-Wallet des Prüfers durch Abgleich mit einem Aussteller-Register prüfen. Des Weiteren kann das ID-Wallet des Prüfers durch Abgleich mit einem Register der ID-Wallets prüfen, ob das ID-Wallet den Anforderungen des ID-Ökosystems entspricht. Anhand eines Abgleichs mit einem Register dezentralisierter Identifikatoren (DID-Register), kann das ID-Wallet des Prüfers prüfen, ob der Inhaber des ID-Wallets dem Prüfer bekannt ist. Mittels eines Registers der Prüfer kann ein Inhaber eines digitalen Nachweises prüfen, ob ein Prüfer berechtigt ist, eine Prüfungsanfrage zu stellen.

Momentan auf dem Markt verfügbare ID-Wallets erlauben es nicht, alle im vorherigen Absatz genannten Prüfungen mittels Vertrauensregister durchzuführen.

Eine selbstbestimmte Identität (SSI) ist eine digitale Identität, die von einem Akteur für sich selber erzeugt und verwaltet werden kann. Dabei ist, im Unterschied zu anderen Arten digitaler Identitäten, keine weitere Instanz notwendig, welche die digitale Identität erstellt und erteilt. Somit hat der Akteur die Kontrolle darüber, welche von seiner digitalen Identität umfassten Daten er wem zu welchen Bedingungen übermittelt. Ein Akteur mit einer digitalen Identität ist innerhalb eines digitalen ID-Ökosystems gegenüber anderen Akteuren durch einen kryptographisch erzeugten digitalen Identifikator (DID) identifizierbar. Ein erster Akteur kann einen digitalen Nachweis, den er an einen zweiten Akteur herausgibt, mit einem seiner DID zugeordneten asymmetrischen Schlüssel signieren. Die DID des zweiten Akteurs wird bei der Herausgabe des Nachweises in die Signatur eingebunden. Der zweite Akteur kann sich bei Präsentation des digitalen Nachweises an einen dritten Akteur gegenüber diesem mit der DID des zweiten Akteurs identifizieren. Da die Signatur des digitalen Nachweises die DID des ersten Akteurs aufweist, ist für den dritten Akteur prüfbar, dass der erste Akteur den digitalen Nachweis ausgestellt hat. Da die Signatur des digitalen Nachweises auch die DID des zweiten Akteurs umfasst, ist für den dritten Akteur prüfbar, dass der zweite Akteur berechtigt ist, den digitalen Nachweis zu präsentieren.

Auf kryptografische Schlüssel, die nicht in einem nur für kryptografische Schlüssel dedizierten Speicher gespeichert, sondern in einem Speicher gespeichert sind, in dem auch andere Daten und/oder Software eines digitalen Endgerätes gespeichert werden, kann zumindest das Betriebssystem auf die kryptografischen Schlüssel zugreifen. Dadurch wären solche Schlüssel kopierbar. Daten, die so gespeichert sind, nennt man auch "in Software gespeichert".

Hardware-Sicherheitsmodule (HSM), auch bekannt als Hardware Security Modules oder Hardware Secure Modules sind Rechengeräte, welche die Speicherung und Verwaltung kryptografischer Schlüssel, sowie die Durchführung kryptografischer Berechnungen ermöglichen. So können sie ohne zusätzliche Software Daten ver- und entschlüsseln. Sie sind so konstruiert, dass sie physische Angriffe mit dem Ziel des Auslesens von Speicherinhalten erkennen und die Speicherinhalte löschen, keine Signale abstrahlen, die auf die in ihnen verarbeiteten Daten hinweisen und die in ihnen gespeicherten Daten (Programmcode, kryptografische Schlüssel, weitere Parameter) nur dediziert an kryptografisch autorisierte Komponenten über definierte Schnittstellen ausgeben. Dadurch sind die kryptografischen Schlüssel und die mit diesen verschlüsselten Daten vor Zugriff durch Angreifer geschützt. Sie können beispielsweise in einem USB-Stick integriert und so an den USB-Anschluss eines Endgerätes angeschlossen werden, oder in einer Chipkarte integriert und mittels eines Kartenlesegerätes an ein Endgerät angeschlossen werden.

HSMs werden zur zwei-Faktor-Authentisierung unter Nutzung eines Aufforderung-Antwort-Verfahren (auch bekannt als Challenge-Response-Verfahren) basierend auf Public-Key-Authentifizierung (Authentifizierung mittels öffentlicher Schlüssel), um zusätzlich zu einem weiteren Faktor eine Zugriffsberechtigung auf Online-Dienste nachzuweisen. Ein solcher weiterer Faktor kann beispielsweise ein Zugangskennwort oder ein digitales Personaldokument sein.

Das Anwendungsprinzip sieht folgendermaßen aus: Akteur B hat das Schlüsselpaar b, bestehend aus privatem Schlüssel und öffentlichem Schlüssel. B gibt den öffentlichen Schlüssel an Akteur A, um von diesem identifiziert werden zu können. Die privaten Schlüssel werden jedoch in Software gespeichert, weshalb sie prinzipiell kopiert werden können.

Das Prinzip ist somit nicht für SSI-basiertes Identitätsverwaltung anwendbar, da digitale Identitäten mangels wirksamem Kopierschutz mehrfach existieren können.

Bei der aus dem Stand der Technik bekannten föderierten Identitätsverwaltung ist es möglich, Attribute einer Identität (auch bekannt als Identitätsmerkmale) auf einem HSM zu speichern. Mittels föderierte Identitätsverwaltung kann ein Akteur mit einer Identität gegenüber verschiedenen miteinander kooperierenden Akteuren (wie z.B. verschiedenen miteinander kooperierenden Webdienstleistern oder miteinander kooperierenden Behörden verschiedener Staaten) authentifizieren, wobei jeder dieser miteinander kooperierenden Akteure entweder einer zentralen Authentifizierungsstelle traut oder jeder Authentifizierungsstelle der jeweils anderen kooperierenden Akteuren traut.

Föderierte Identitätsverwaltung ist somit auch nicht für SSI-basierte Identitätsverwaltung anwendbar, weil sichere Kommunikation nur mittels einer Authentifizierungsstelle möglich ist und eine selbstbestimmte Weitergabe von Daten durch den Inhaber einer Identität mit seinem digitalen Endgerät nicht möglich ist.

Gemäß dem Stand der Technik werden im Zusammenhang mit HSMs implizite Verfahren zur Datenübertragung verwendet. Das bedeutet, dass das zur Interpretation der Daten erforderliche Wissen beim Empfänger vorliegen muss. In Chipkarten-basierten Anwendungen, wie z.B. dem elektronischen Identitätsnachweis der Bundesrepublik Deutschland (elD), werden die Attribute der Identität des Halters in der Chipkarte, wie z.B. einem Personalausweis mit elD-Funktion, gespeichert. Diese Attribute werden beispielsweise in Tag-Length-Value-Formaten (TLV-Formaten), auch als Type-Length-Value-Formaten oder Typ-Länge-Wert-Formaten bekannt gespeichert. Bei Verwendung von TLV-Formaten müssen Sender und Empfänger zur Interpretation von übermittelten Daten erforderliches Wissen austauschen, wodurch die Interoperabilität behindert wird.

Zur Implementation von SSI werden nach dem Stand der Technik selbstbeschreibende Datenformate, beispielsweise das JSON-Format, zur Abbildung von digitalen Nachweisen verwendet. Die überprüfbaren Nachweise nehmen dabei einen größeren Speicherplatz ein, enthalten jedoch zur Interoperabilität ausreichend Information, so dass Sender und Empfänger zur Interpretation von übermittelter Information kein zusätzlich erforderliches Wissen austauschen müssen. Ein Inhaber einer ID-Wallet kann jedoch nicht prüfen, ob ein Vertrauensregister (z.B. ein Register der Entitäten, die eine Zulassung haben, einen bestimmten Typ überprüfbarer Nachweise auszustellen), auf welches der überprüfbare Nachweis verlinkt und/oder verweist, authentisch oder gefälscht ist.

Im Stand der Technik weisen Webbrowser und Betriebssysteme Trust-Stores auf, die die Funktion haben, organisatorische Vertrauensanker abzubilden und digitale Zertifikate zu verwalten. Solche organisatorischen Vertrauensanker sind in den meisten Fällen Zertifikate, die mittels qualitätsgeprüfter Verfahren von Zertifizierungsstellen (auch bekannt als Certificate Authorities) erstellt werden. Diese durch Zertifizierungsstellen ausgestellten Zertifikate sind selbst-signiert und werden auch Root-Zertifikate genannt. Die Zertifizierungsstellen sind per Gesetz und/oder Audits dazu befugt, Root-Zertifikate auszustellen. Die Audits und die der Erstellung von Root-Zertifikaten zugrundeliegenden Verfahren sind den meisten Nutzern von Webbrowsern und Betriebssystemen jedoch unklar. Darüber hinaus würden in dem Fall, das eine Zertifizierungsstelle kompromittiert ist alle Nutzer derer Root-Zertifikate als Vertrauensanker davon betroffen sein. So können digitale Identitäten und Zugangsdaten von Nutzern von Angreifern entwendet werden.

In der Druckschrift US 11,900,340 B1 werden dezentrale Netzwerke und deren Anwendung zur sicheren Übertragung digitaler Vermögenswerte beschrieben. Der Hauptfokus liegt auf der Verwaltung dezentraler Identitäten, um die Kontrolle über persönliche Daten zu verbessern. Das Verfahren zur Verwaltung sicherer digitaler Identitäten basiert auf dem Prinzip der selbstbestimmten Identität (SSI) unter Verwendung dezentraler Identifikatoren (DIDs) und verifizierbarer Anmeldeinformationen.

Ein Identitäts-Wallet auf einem digitalen Endgerät wird zur Verwaltung der dezentralen Identität und der damit verbundenen Daten verwendet.

Ein Hardware-Sicherheitsmodul fügt zusätzliche Sicherheitsschichten hinzu. Ein Beispiel ist der Einsatz eines Wallet-Hardware-Schlüssels, der sensorische Eingaben wie Fingerabdruck oder PIN verwendet, um den Zugriff zu steuern.

Ein Applet zur Verwaltung und Sicherung von dezentralen Identifikatoren und der damit verbundenen Daten durch den Einsatz eines Applet-basierten API-Sharing-Mechanismus innerhalb einer gesicherten Umgebung wird verwendet.

Das Dokument beschreibt Mechanismen zur sicheren und flexiblen Freigabe von digitalen Nachweisen zwischen verschiedenen Dienstleistern und Nutzern, einschließlich der Verwendung von APls und spezifischen Zugriffskontrollen, die durch den Benutzer definiert werden.

Nachteilig sind private Schlüssel dabei in Software gespeichert und nicht unveränderbar. Kryptografische Berechnungen finden dezentral statt. Dadurch ist die Sicherheit der kryptografischen Rechnungen nicht gewährleistet.

Die EP 4 092 958 A1 offenbart ein Verfahren und ein System zum Auslesen von Nutzerattributen aus einem ID-Token mittels eines ID-Providers und Bereitstellen eines verifizierbaren digitalen Nachweises mit den ausgelesenen Nutzerattributen in einem ID-Wallet eines mobilen Endgeräts unter Verwendung eines Ausstellerdienstes einer Infrastruktur für selbstbestimmten Identitäten (SSI-Infrastruktur). Dabei sind die Nutzerattribute in einem geschützten Speicherbereich des ID-Tokens gespeichert. Die SSI-Infrastruktur umfasst eine Blockchain mit einem Datenschema und ein dem Ausstellerdienst zugeordneter öffentlicher Signaturprüfschlüssel zum Prüfen des digitalen Nachweises, bzw. dessen Signatur.

Das mobile Endgerät sendet eine Anfrage zum Ausstellen des digitalen Nachweises an den Ausstellerdienst zum Auslesen der Nutzerattribute durch den ID-Provider aus dem ID-Token. Das mobile Endgerät gibt dem ID-Provider Lesezugriff auf die Nutzerattribute im ID-Token, zum Weiterleiten der Nutzerattribute an den Ausstellerdienst.

Das ID-Wallet empfängt den vom Ausstellerdienst ausgestellten digitalen Nachweis. Der Nachweis ist dabei in Übereinstimmung mit dem in der Blockchain bereitgestellten Datenschema aufgebaut.

In Ausführungsformen sind das Schlüsselmaterial und mit diesem verschlüsselte digitale Nachweise auf einem Sicherheitselement im mobilen Endgerät gespeichert. Nur autorisierte Dienste und Anwendungen können kryptographische Mittel im Sicherheitselement einbringen, ergänzen, verändern und/oder löschen.

Nachteilig ist die Nutzung der Blockchain-Technologie, deren Energieverbrauch hoch ist und deren großskaliger Einsatz eine hohe Rechenleistung erfordert.

Die US 2008/0307515 A1 beschreibt ein Verfahren zur Authentifizierung eines Benutzers, welches die folgenden Schritte umfasst:
- Senden einer Authentifizierungsanfrage an eine entfernte Authentifizierungsvorrichtung;
- Erzeugen eines ersten Teils von Authentifizierungsinformationen;
- Empfangen in einem Mobilgerät der ersten Authentifizierungsinformation von einem Zugangsterminal oder der entfernten Authentifizierungsvorrichtung;
- Erzeugen einer zweiten Authentifizierungsinformation im Mobilgerät des Benutzers, die zumindest teilweise auf der empfangenen ersten Authentifizierungsinformation basiert;
- Senden der zweiten Authentifizierungsinformation an die entfernte Authentifizierungsvorrichtung;
- Validieren der zweiten Authentifizierungsinformation und Erzeugen eines Authentifizierungssignals im Falle der erfolgten Validierung.

Nachteilig sind private Schlüssel dabei in Software gespeichert, wodurch sie kompromittiert werden können.

Die Druckschrift DE 10 2011 110 898 A1 offenbart Verfahren zur Authentifizierung eines Benutzers zum Gewähren eines Zugangs zu Diensten eines Computersystems, umfassend:
- Senden einer Authentifizierungsanfrage von einem Kommunikationsgerät, das dem Benutzer zugeordnet ist, an einen Authentifizierungsserver, wobei die Authentifizierungsanfrage eine Transaktionskennung, sowie eine den Benutzer identifizierende Benutzerkennung enthält;
- Austauschen verschlüsselter Nachrichten zwischen dem Authentifizierungsserver und dem Kommunikationsgerät, wobei der Authentifizierungsserver zur Verschlüsselung einen zur Benutzerkennung gehörenden kryptografischen Schlüssel und das Kommunikationsgerät zur Verschlüsselung einen für den Authentifizierungsserver spezifischen kryptografischen Schlüssel verwendet;
- Bestimmen eines Authentifizierungsergebnisses in dem Authentifizierungsserver auf Grundlage der in den ausgetauschten verschlüsselten Nachrichten enthaltenen Daten;
- Senden des Authentifizierungsergebnisses von dem Authentifizierungsserver an das Computersystem und Gewähren eines Zugangs des Benutzers zu Diensten des Computersystems im Falle der erfolgten Authentifizierung.

Eine Authentifizierungsapplikation auf dem Kommunikationsgerät des Benutzers besitzt den privaten Schlüssel. Nachteilig ist dieser in Software gespeichert, wodurch er von einem Angreifer entwendet werden könnte.

In der Druckschrift WO 2023/034284 A1 wird ein System und ein Verfahren zur Nutzung in der Implementation von selbstbestimmten digitalen Nachweisen beschrieben. Ein computerimplementiertes Verfahren zur Verwendung bei der Bereitstellung eines verifizierbaren Berechtigungsnachweises für einen Vertrauensgeber, umfassend:
- Empfangen einer Identitätsanforderung von einem Vertrauensgeber durch einen Identitätsanbieter (IDP);
- Leiten der Identitätsanforderung durch den IDP an einen Benutzer einer Anwendung an einem Mobilgerät des Benutzers, wobei das Mobilgerät einen verifizierbaren Berechtigungsnachweis enthält;
- Empfangen des verifizierbaren Berechtigungsnachweises durch den IDP vom Mobilgerät;
- Verifizieren des verifizierbaren Berechtigungsnachweises durch die den IDP auf der Grundlage eines öffentlichen Schlüssels, der mit einem Aussteller des verifizierbaren Berechtigungsnachweises verbunden ist;
- Übertragen einer ersten Autorisierung des verifizierbaren Berechtigungsnachweises an den Vertrauensgeber durch den IDP;
- Empfangen einer Anforderung von Identitätsdaten vom Vertrauensgeber durch den IDP, wobei die Identitätsdatenanforderung eine zweite Autorisierung bezüglich des überprüfbaren Berechtigungsnachweises enthält; und
- als Reaktion auf die Übereinstimmung der ersten Autorisierung mit der zweiten Autorisierung, Übergabe der Identitätsdaten an den Vertrauensgeber.

Es besteht auch die Möglichkeit, dass der verifizierbare Berechtigungsnachweis durch einen privaten Schlüssel signiert wird. Nachteilig ist dieser in Software gespeichert.

In der Druckschrift DE 10 2020 130 815 B3 wird ein Verfahren zum selektiven Bereitstellen von Benutzerdaten mit folgenden Schritten offenbart:
- Authentifizieren eines Benutzers;
- Autorisieren einer Bereitstellung von mittels einer zentralen Einheit (einem Authentifizierungsserver oder einer äquivalenten Einrichtung) angeforderten Benutzerdaten des Benutzers; und
- Bereitstellen der angeforderten Benutzerdaten zum Übertragen an die zentrale Einheit, wobei das Autorisieren und das Bereitstellen der angeforderten Benutzerdaten mittels einer dezentralen Vorrichtung (einem mobilen Endgerät oder ein äquivalenten Endgerät des Nutzers) erfolgen und wobei das Bereitstellen der angeforderten Benutzerdaten das Verschlüsseln von auf der dezentralen Vorrichtung gespeicherten Benutzerdaten umfasst und wobei die zentrale Einheit nicht über den Schlüssel zum Entschlüsseln der verschlüsselten Benutzerdaten verfügt.

Das Verfahren weist keine privaten Schlüssel auf und die dezentralen Identifikatoren basieren auf Blockchain-Technologie.

Nachteilig am Stand der Technik ist die sowohl die mangelnde Selbstbestimmtheit der Akteure als auch und die mangelnde Sicherheit ihrer personenbezogener Daten, sowie der von den Akteuren gehaltenen digitalen Zertifikate.

Aufgabe ist es daher, ein System und ein Verfahren bereitzustellen, welche die Nachteile des Standes der Technik überwinden und die Fälschung digitaler Nachweise verhindern, sowie einen Kopierschutz für diese und für digitale Identitäten ermöglichen.

Erfindungsgemäß wird die Aufgabe durch ein System mit den Merkmalen des Anspruchs 1, ein Verfahren mit den Merkmalen des Anspruchs 8, sowie Verwendungen mit den Merkmalen des Anspruchs 15 gelöst. Vorteilhafte Ausgestaltungen der Erfindung sind in den abhängigen Ansprüchen angegeben.

Ein erster Aspekt der Erfindung betrifft ein System zur sicheren Ausstellung, zum sicheren Empfang, zur sicheren Präsentierung und zur sicheren Überprüfung digitaler Nachweise zwischen zwei Akteuren eines gemeinsamen digitalen ID-Ökosystems, mindestens aufweisend:
- mindestens ein erstes, operativ nicht manipulierbares Hardware-Sicherheitsmodul , welches so konstruiert ist, dass dessen Funktionen nur durch Nutzung einer Anwendungsprogramm-HSM-Schnittstelle eines ersten Anwendungsprogramms steuerbar sind und dass in vom ersten Anwendungsprogramm verwalteten Registern gespeicherte Daten zum Teil überhaupt nicht und zum Teil nur durch im ersten Anwendungsprogramm (200) installierten Funktionen generiert, geändert, oder gelöscht werden können,
- mindestens eine erste ID-Wallet, aufweisend mindestens eine zur Kommunikation mit mindestens einer zweiten ID-Wallet geeigneten ID-Wallet-zu-ID-Wallet-Kommunikationsschnittstelle,
- mindestens ein erstes digitales Endgerät, wobei auf dem die erste ersten ID-Wallet installiert ist, wobei die erste ID-Wallet mittels einer ID-Wallet-HSM-Kommunikationsschnittstelle mit dem ersten Hardware-Sicherheitsmodul verbunden ist und dazu ausgelegt ist, unter Verwendung der Anwendungsprogramm-HSM-Schnittstelle mit einem ersten Anwendungsprogramm zu kommunizieren,
- mindestens ein erstes auf dem ersten Hardware-Sicherheitsmodul gespeichertes, operativ nicht manipulierbares Anwendungsprogramm, das dazu ausgebildet ist, eine Kommunikation zwischen dem ersten Hardware-Sicherheitsmodul und dem ersten digitalen Endgerät herzustellen, zu steuern und zu verwalten, sowie Rechenoperationen auf dem ersten Hardware-Sicherheitsmodul auszuführen,
   wobei
- das erste Hardware-Sicherheitsmodul mindestens ein Installateurs-Schlüsselregister zur Speicherung von mindestens einem kryptografischen Schlüssel aufweist, der zur symmetrisch verschlüsselten Kommunikation zwischen dem ersten, auf dem ersten Hardware-Sicherheitsmodul gespeicherten, Anwendungsprogramm und einem zweiten, auf einem zweiten Hardware-Sicherheitsmodul gespeicherten Anwendungsprogramm, mittels der ersten ID-Wallet und der zweiten, mit mindestens einer zur Kommunikation mit der ersten ID-Wallet geeigneten ID-Wallet-zu- ID-Wallet-Kommunikationsschnittstelle ausgestatteten, ID-Wallet , geeignet ist,
- das erste Hardware-Sicherheitsmodul mindestens ein Identitäts-Schlüsselregister zur Hinterlegung von mindestens einem privaten Schlüssel aufweist,
- das erste Hardware-Sicherheitsmodul mindestens ein Register digitaler Nachweise aufweist, wobei das Register digitaler Nachweise dazu geeignet ist, Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise umfassen,
- das erste Hardware-Sicherheitsmodul dazu eingerichtet ist,
   o kryptografische Rechenoperationen durchzuführen,
   o mittels des ersten Anwendungsprogramms mindestens eine selbstbestimmte Identität (SSI) und mindestens ein zur SSI gehöriges, zu einer asymmetrischen Verschlüsslung geeignetes Schlüsselpaar zu erzeugen, abzuspeichern, zu löschen und/oder zu verwalten, wobei das geeignete Schlüsselpaar einen privaten und einen öffentlichen Schlüssel umfasst,
   o mindestens einen, als dezentralisierten Identifikator (DID) definierten, berechneten Hashwert des öffentlichen Schlüssels der SSI, in der ID-Wallet zu verwalten,
- das erste Hardware-Sicherheitsmodul
   ∘ jegliche Übertragung privater Schlüssel aus dem Identitäts-Schlüsselregister des ersten Hardware-Sicherheitsmodul heraus oder in diesen hinein verhindert und
   ∘ Übertragungen öffentlicher Schlüssel mittels der Anwendungsprogramm-HSM-Schnittstelle ermöglicht.

Das erste Anwendungsprogramm ist konfiguriert , um vorrotierte Schlüssel zu erzeugen und im Identitäts-Schlüsselregister des ersten Hardware-Sicherheitsmodul zu speichern, wobei das Hardware-Sicherheitsmodul die Anwendungsprogramm-HSM-Schnittstelle aufweist, die dazu ausgelegt ist, öffentliche kryptografische Schlüssel zu exportieren, wobei das Register digitaler Nachweise Signaturen, mindestens einen DID eines Austellers und Zustandsparameter der im Speicherbereich für digitale Nachweise registrierten digitalen Nachweise aufweist.

Bevorzugt weist das System zur sicheren Ausstellung, zum sicheren Empfang, zur sicheren Präsentierung und zur sicheren Überprüfung digitaler Nachweise zwischen zwei Akteuren eines gemeinsamen digitalen ID-Ökosystems, mindestens folgendes auf:
- mindestens ein erstes, operativ nicht manipulierbares Hardware-Sicherheitsmodul , welches so konstruiert ist, dass dessen Funktionen nur durch Nutzung einer Anwendungsprogramm-HSM-Schnittstelle eines ersten Anwendungsprogramms steuerbar sind und das erste Anwendungsprogramm dazu konfiguriert ist, Register zu verwalteten, wobei die Register jeweils als mindestens ein Installateurs-Schlüsselregister zur Speicherung von mindestens einem kryptografischen Schlüssel, mindestens ein Identitäts-Schlüsselregister zur Hinterlegung von mindestens einem privaten Schlüssel und mindestens ein Register digitaler Nachweise ausgelegt sind,
- mindestens eine erste ID-Wallet, aufweisend mindestens eine zur Kommunikation mit mindestens einer zweiten ID-Wallet geeigneten ID-Wallet-zu-ID-Wallet-Kommunikationsschnittstelle,
- mindestens ein erstes digitales Endgerät, wobei auf dem die erste ersten ID-Wallet installiert ist, wobei die erste ID-Wallet mittels einer ID-Wallet-HSM-Kommunikationsschnittstelle mit dem ersten Hardware-Sicherheitsmodul verbunden ist und dazu ausgelegt ist, unter Verwendung der Anwendungsprogramm-HSM-Schnittstelle mit einem ersten Anwendungsprogramm zu kommunizieren,
- mindestens ein erstes auf dem ersten Hardware-Sicherheitsmodul gespeichertes, operativ nicht manipulierbares Anwendungsprogramm, das dazu ausgebildet ist, eine Kommunikation zwischen dem ersten Hardware-Sicherheitsmodul und dem ersten digitalen Endgerät herzustellen, zu steuern und zu verwalten, sowie Rechenoperationen auf dem ersten Hardware-Sicherheitsmodul auszuführen,
   wobei
- das erste Hardware-Sicherheitsmodul das mindestens eine Identitäts-Schlüsselregister und das mindestens eine Installateurs-Schlüsselregister zur Speicherung von mindestens einem kryptografischen Schlüssel aufweist und der im Installateurs-Schlüsselregister gespeicherte kryptografischen Schlüssel so konfiguriert ist, dass er eine symmetrisch verschlüsselte Kommunikation zwischen dem ersten, auf dem ersten Hardware-Sicherheitsmodul gespeicherten, Anwendungsprogramm und einem zweiten, auf einem zweiten Hardware-Sicherheitsmodul gespeicherten Anwendungsprogramm, mittels der ersten ID-Wallet und der zweiten ID-Wallet, die mit mindestens einer zur Kommunikation mit der ersten ID-Wallet geeigneten ID-Wallet-zu-ID-Wallet-Kommunikationsschnittstelle ausgestattet ist, ermöglicht,
- das erste Hardware-Sicherheitsmodul das mindestens eine Identitäts-Schlüsselregister zur Hinterlegung von mindestens einem privaten Schlüssel aufweist,
- das erste Hardware-Sicherheitsmodul das mindestens eine Register digitaler Nachweise aufweist, wobei das Register digitaler Nachweise konfiguriert ist, um Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise umfassen,
- das erste Hardware-Sicherheitsmodul dazu eingerichtet ist,
   ∘ kryptografische Rechenoperationen durchzuführen,
   o mittels des ersten Anwendungsprogramms mindestens eine selbstbestimmte Identität (SSI) und mindestens ein zur SSI gehöriges, zu einer asymmetrischen Verschlüsslung geeignetes Schlüsselpaar und/oder mindestens einen vorrotierten Schlüssel zu erzeugen, abzuspeichern, zu löschen und/oder zu verwalten und/oder im Identitäts-Schlüsselregister des ersten Hardware-Sicherheitsmoduls zu speichern, wobei das geeignete Schlüsselpaar einen privaten und einen öffentlichen Schlüssel umfasst,
   o mindestens einen, als dezentralisierten Identifikator (DID) definierten, berechneten Hashwert des öffentlichen Schlüssels der SSI, in der ID-Wallet zu verwalten,
- das erste Hardware-Sicherheitsmodul
   ∘ jegliche Übertragung privater Schlüssel aus dem Identitäts-Schlüsselregister des ersten Hardware-Sicherheitsmodul heraus oder in diesen hinein verhindert und
   ∘ Übertragungen öffentlicher Schlüssel mittels der Anwendungsprogramm-HSM-Schnittstelle ermöglicht,
- das erste Anwendungsprogramm konfiguriert ist, um vorrotierte Schlüssel zu erzeugen und im Identitäts-Schlüsselregister des ersten Hardware-Sicherheitsmodul zu speichern, wobei das Hardware-Sicherheitsmodul die Anwendungsprogramm-HSM-Schnittstelle aufweist, die dazu ausgelegt ist, öffentliche kryptografische Schlüssel zu exportieren, wobei das Register digitaler Nachweise Signaturen, mindestens einen DID eines Austellers und Zustandsparameter der im Speicherbereich für digitale Nachweise registrierten digitalen Nachweise aufweist.

Öffentliche Schlüssel können auch als Public Keys (oder PUK) und private Schlüssel als Private Keys bezeichnet werden.

Im Sinne der Erfindung ist ein digitaler Nachweis (auch als Credential bekannt) ein Satz von einer oder mehreren Aussagen eines Ausstellers. Ein überprüfbarer digitaler Nachweis (auch als Verifiable Credential bezeichnet) ist ein fälschungssicherer Nachweis, dessen Urheberschaft kryptografisch verifiziert werden kann. Überprüfbare digitale Nachweise können verwendet werden, um überprüfbare Präsentationen zu erstellen, die ebenfalls kryptografisch verifiziert werden können. Die Aussagen in einem Nachweis können sich auf verschiedene Themen beziehen. Zum Beispiel können Sie Aussagen über Berechtigung zur Nutzung einer Dienstleistung, einer Ressource oder einer Vorrichtung sein. Beispiele digitaler Nachweise sind digitale Ausweisdokumente (wie z.B. elektronische Identitätsnachweise [elD], digitale Führerscheine, digitale Bankkontoverfügungsberechtigungen oder ähnliche), Nachweisdokumente (wie z.B. amtliche Bescheinigungen, Registerauszüge, Berechtigungsnachweise, Urkunden, oder ähnliche), oder werthaltige digitale Nachweise (wie z.B. digitale Schuldscheine, digitale Währung, z.B. digitale Zentralbankwährung (Central Bank Digital Currency - CBDC), digitale Einzugsermächtigungen, Konzertkarten, Fahrkarten, Tickets im Allgemeinen).

Im Sinne der Erfindung kann ein Akteur eine Entität einer Vielzahl von Arten sein. Beispielsweise können Akteure natürliche Personen, juristische Personen, Organisationen, Gesellschaften, hoheitliche Entitäten, Behörden, Völkerrechtssubjekte oder IoT-Objekte. IoT steht für Internet of Things (Internet der Dinge, oder Allesnetz) und loT-Objekte können auch als robotische, teilautonome oder vollautonome Vorrichtungen ausgebildet sei. Beispielsweise können ein (autonomes oder nicht-autonomes) Fahrzeug und eine elektrische Ladestation oder unbemannte Zapfsäule jeweils loT-Objekte sein.

Ein ID-Ökosystem ist im Sinne der Erfindung ein Ensemble einer interoperablen, vernetzten und/oder vernetzbaren digitalen Infrastruktur, die es Akteuren erlaubt, sich voreinander zu authentifizieren, sowie digitale Nachweise zu verwalten, untereinander zu präsentieren und/oder zu übertragen.

Im Sinne der Erfindung sind Hardware-Sicherheitsmodule (HSM) Rechengeräte, die mindestens einen Kryptoprozessor aufweisen. Sichere, für die Kryptografie relevante Komponenten von anderen Prozessoren (bspw. CPU oder GPU) sind keine Hardware-Sicherheitsmodule im Sinne der Erfindung. HSM sind gegenüber anderen Prozessortypen besonders manipulationsresistent und auch gegen unbefugten physischen Zugriff auf die in ihnen gespeicherten Daten geschützt. Es können auch selbstnivellierende Materialien in einem HSM vergossen sein und die Kryptoprozessoren eines HSM können so ausgelegt sein, dass auf ihnen gespeicherte Schlüssel beim Versuch, den Verguss zu entfernen, gelöscht oder auf einen Standardwert (z.B. eine Reihe Nullen) zurückgesetzt wird. Das Vergießen, wie auch das vergossene Material selber wird auch als Potting bezeichnet. Elektrische Leiterbahnen von HSM sind auch möglichst kurz, um Seitenkanalangriffe mittels Abfangens von durch kryptographische Operationen emittierter elektromagnetischer Strahlung zu erschweren. Beispielsweise können Chipkarten (Smartcards oder Chipkarten), Dongles und/oder USB-Sticks HSM aufweisen.

In den Registern gespeicherte Daten können zum Teil überhaupt nicht und zum Teil nur durch im ersten Anwendungsprogramm installierte Funktionen generiert, geändert, oder gelöscht werden.

In Ausführungsformen des Systems ist das Anwendungsprogramm als Applet ausgelegt.

Die ID-Wallets sind im Sinne der Erfindung jeweils die Kombination aus einer Software zur Verwaltung überprüfbarer digitaler Nachweise in Kombination mit einem der Software zugeordneten und von der Software verwalteten, zur Speicherung von digitalen Nachweisen bestimmter Speicherbereich auf der Hardware, auf der die Software läuft. Die ID-Wallet kann auf dem digitalen Endgerät gespeichert und ausgeführt werden, oder auf einer separaten Hardware gespeichert sein, wobei die separate Hardware zur Nutzung der ID-Wallet mit dem Endgerät verbunden wird und die ID-Wallet mittels des mobilen Endgerätes bedient wird.

Die digitalen Endgeräte können im Sinne der Erfindung jeweils eine mobile Recheneinheit (bspw. eine Smartwatch, ein Mobiltelefon, ein Smartphone, ein Phablet, ein Tablet-Computer, ein Netbook, ein Notebook, ein Kartenleser oder ein Fahrkartenscanner), ein Desktopcomputer, eine bedienerlose Recheneinheit (bspw. ein loT-Gerät), ein Rechner zur automatisierten Datenverarbeitung (bspw. ein Server oder ein Rechencluster) sein.

Die Kommunikationsschnittstelle kann beispielsweise eine DIDComm-Schnittstelle oder eine OpenlD4VC-Schnittstelle sein.

Die HSM und die digitalen Endgeräte können mittels einer aus dem Stand der Technik bekannten Kommunikationsverbindung miteinander verbunden sein. Diese können beispielsweise eine USB-Verbindung, einem USB-Chipkartenlesegerät, einer ISO 7816-3 Verbindung, eine Bluetooth-Verbindung, einem Bluetooth-Chipkartenlesegerät, eine WLAN-Verbindung, einem Adapter, eine Ethernet-Verbindung, eine Internetverbindung, eine Nahfeldkommunikationsverbindung, eine AirDrop-Verbindung oder eine Nearby-Share-Verbindung sein. Die Kommunikation kann auch ein ad-hoc-Netz sein. Die HSM können auch jeweils im digitalen Endgerät integriert sein, ohne jedoch in anderen Prozessoren des Endgerätes integriert zu sein. Im Rahmen dieser Anmeldung kann sich die Aussage, dass ein HSM mit einem Endgerät verbunden sei auch auf HSM beziehen, die in einem Endgerät integriert sind.

Die HSM weisen jeweils ein Installateurs-Schlüsselregister zur Speicherung von mindestens zwei, bevorzugt vier oder mehr kryptografischen Schlüsseln zur symmetrisch verschlüsselten Kommunikation mit einem zweiten HSM auf.

In Ausführungsformen ist das Installateurs-Schlüsselregister des jeweiligen HSM dazu ausgebildet zwischen 2 und 256 kryptografische Schlüssel zu enthalten
Das Installateurs-Schlüsselregister, das Identitäts-Schlüsselregister und das Register digitaler Nachweise kann jeweils eine Datei umfassen oder aus einer Datei bestehen.

Im Register digitaler Nachweise (auch als Credential-Register bezeichnet) werden die Signaturen, die Aussteller-DIDs und Zustandsparameter der im Speicherbereich für digitale Nachweise registrierten digitalen Nachweise gespeichert.

Die Hashwerte (Streuwerte) digitaler Nachweise sind im Sinne der Erfindung Werte, die Anwendung einer Hashfunktion (Streuwertfunktion) auf die digitalen Nachweise ermittelt werden. Eine Hashfunktion ermittelt anhand der Daten, aus denen ein digitaler Nachweis besteht eine Zeichenfolge einer bestimmten Länge, wobei die Zeichenfolge einen geringeren Speicherplatz einnimmt, als der digitale Nachweis selber. Diese Zeichenfolge ist der Hashwert. Die Hashfunktion ist so ausgelegt, dass jedem digitalen Nachweis ein einzigartiger Hashwert entspricht. Jegliche Veränderung oder Manipulation eines digitalen Nachweises, würde, bei Anwendung einer Hashfunktion auf diesen Nachweis, zu einem anderen Hashwert führen.

Die Asymmetrische Verschlüsselung ist im Sinne der Erfindung eine Verschlüsselung, die auf mindestens einem Schlüsselpaar beruht, welches einen öffentlichen und einen privaten, geheimen Schlüssel aufweist. Ein Akteur 1 kann eine Information mit dem öffentlichen Schlüssel von einem Akteur 2 verschlüsseln. Die so verschlüsselte Information kann nur mit dem privaten Schlüssel von Akteur 2 entschlüsselt werden.

Das Verwalten des als dezentralisierten Identifikator (DID) definierten Hashwertes kann das Erzeugen, Speichern oder Löschen umfassen.

In Ausführungsformen des Systems ist die erste ID-Wallet dazu ausgelegt, den von ihr verwalteten Speicherbereich digitaler Nachweise auf dem ersten digitalen Endgerät mit einem kryptografischen Schlüssel der ersten ID-Wallet verschlüsselt abzuspeichern, wobei der kryptografische Schlüssel der ersten ID-Wallet nicht auf dem ersten digitalen Endgerät, sondern auf dem ersten HSM gespeichert ist.

In Ausführungsformen des Systems ist die erste ID-Wallet dazu ausgelegt, mittels der Nutzeroberfläche der ID-Wallet die Datenausgabe an einen Inhaber der ersten ID-Wallet und die Dateneingabe durch den Inhaber der ersten ID-Brieftasche zu ermöglichen.

Das erste HSM und/oder das zweite HSM weisen keine Schnittstelle auf, über die kryptografische Schlüssel, die als Grundlage einer DID dienen, in das jeweilige HSM importiert oder private kryptografische Schlüssel aus dem jeweiligen HSM exportiert werden können.

Dass das HSM operativ nicht manipulierbar ist bedeutet, dass mittels direkten physischen Zugriffs die im Installateurs-Schlüsselregister gespeicherten Schlüssel nicht durch einen Akteur ausgelesen und/oder verändert werden können und dass nur ein Installateur mittels Ansteuerung durch eine Software, im Installateurs-Schlüsselregister gespeicherten Schlüssel austauschen kann.

In Ausführungsformen des Systems weist die erste ID-Wallet wenigstens einen Speicher auf, der dazu geeignet ist, verschlüsselte digitale Nachweise zu enthalten, wobei Schlüssel zur Verschlüsselung der digitalen Nachweise im Hardware-Sicherheitsmodul gespeichert sind und der Speicher
- mindestens einen ersten Speicherbereich für digitale Nachweise für auf den Inhaber der ersten ID-Wallet ausgestellte überprüfbare digitale Nachweise aufweist, sowie
- mindestens einen zweiten Speicherbereich für auf vom Inhaber der ersten ID-Wallet als vertrauenswürdig eingestufte Akteure ausgestellte vertrauenswürdige digitalen Nachweise und/oder Nachweisketten aufweist, wobei die vertrauenswürdigen digitalen Nachweise und/oder die Nachweisketten jeweils wenigstens einen ersten öffentlichen kryptografischen Schlüssel aufweisen.

In Ausführungsformen des Systems weist die erste ID-Wallet wenigstens einen Speicher auf, der dazu geeignet ist, verschlüsselte digitale Nachweise zu enthalten, wobei Schlüssel zur Verschlüsselung der digitalen Nachweise im ersten Hardware-Sicherheitsmodul gespeichert sind und der Speicher
- mindestens einen ersten Speicherbereich für auf den Inhaber der ersten ID-Wallet ausgestellte überprüfbare digitale Nachweise aufweist, sowie
- mindestens einen zweiten Speicherbereich für vertrauenswürdige digitale Nachweise und/oder Nachweisketten, welche auf vom Inhaber der ersten ID-Wallet als vertrauenswürdig eingestufte Akteure ausgestellt sind, wobei die vertrauenswürdigen digitalen Nachweise und/oder Nachweisketten jeweils wenigstens einen ersten öffentlichen kryptografischen Schlüssel aufweisen.

Auf den Inhaber der ersten ID-Wallet ausgestellte überprüfbare digitale Nachweise können beispielsweise Nachweise über Eigenschaften oder Attribute des Inhabers sein, wie z.B. Altersnachweise, Geburtsdatum oder Nachweise über seinen Namen. Die auf den Inhaber der ersten ID-Wallet ausgestellten überprüfbaren digitalen Nachweise können auch boolesche Werte aufweisen, wie z.B. die Antwort auf die Frage,
- ob der Inhaber der ersten ID-Wallet ein bestimmtes Alter überschritten hat, oder
- ob der Inhaber der ersten ID-Wallet einer Gruppe angehört.

Im zweiten Speicherbereich werden digitale Nachweise hinterlegt, nachdem sie der ID-Wallet durch einen anderen Akteur präsentiert, erfolgreich durch die ID-Wallet kryptografisch bzgl. ihrer Integrität geprüft und vom Akteur als vertrauenswürdig eingestuft wurden. Ein solcher digitaler Nachweis enthält einen öffentlichen kryptografischen Schlüssel, der mit einer ebenfalls im digitalen Nachweis benannten digitalen Identität in Verbindung steht. Ein solcher digitaler Nachweis kann im Sinne einer Vertretungsberechtigung Rechte zur Ausstellung und/oder Kontrolle von Nachweis-Typen, welche im digitalen Nachweis referenziert sind, im Namen einer ausstellenden digitalen Identität beinhalten. Diese digitalen Nachweise können andere digitalen Nachweise im zweiten Speicherbereich referenzieren. Im Unterschied zum Trust-Store eines Webbrowsers werden im zweiten Speicherbereich der ID-Wallet keine Zertifikate abgelegt, die eine Aussage der Zuordnung von URL zu einer Entität oder einem Server treffen, sondern überprüfbare digitale Nachweise, die eine Aussage der Zuordnung eines DID zu einem öffentlichen Schlüssel und gegebenenfalls zu einem Akteur der Realwelt sowie gegebenenfalls einer mit dieser DID verbundenen anderen DID treffen.

Mit dem zweiten Speicherbereich der ID-Wallet wird die dezentrale Übertragung organisatorischer Vertrauensanker erreicht. Anstatt einem vollkommen unbekannten Zertifizierungsdienst z.B. in einem anderen Staat zu vertrauen, kann der Inhaber der Wallet sein digitales Vertrauen auf Organisationen begründen, die er kennt und denen er auch in der Realwelt selbst vertraut. Z.B. kann eine Kommune vertrauenswürdige mit einem öffentlichen Schlüssel versehene digitale Nachweise anderer Kommunen an die ID-Wallets ihrer Bürger verteilen. Durch von Kommune zu Kommune entstehende Vertrauensketten, kann sich Vertrauen im digitalen Raum fortpflanzen und im zweiten Speicherbereich einer ID-Wallet abbilden. Zusätzlich wird der zweite Speicherbereich der ID-Wallet durch vertrauenswürdige Kontakte des Inhabers gefüllt, indem beim Abspeichern eines überprüfbaren Nachweises im ersten Speicherbereich gleichzeitig die zugehörige mit dem überprüfbaren Nachweis übermittelte Nachweiskette bis zu dem, mit einem öffentlichen Schlüssel versehenen, digitalen Nachweis des Herausgebers im zweiten Speicherbereich der ID-Wallet abgespeichert wird.

Eine Nachweiskette ist eine Serie von zwei oder mehr Nachweisen, von denen jeder Nachweis der Serie, bis auf der letzten Nachweis, zumindest den jeweils nächsten Nachweis referenziert, so dass alle Nachweise der Nachweiskette zumindest indirekt mittels Referenzen verbunden sind.

In Ausführungsformen kann die ID-Wallet mindestens einen dritten Speicherbereich aufweisen. Ist ein Akteur ein Prüfer mindestens eines überprüfbaren digitalen Nachweises eines anderen Akteurs, wird der überprüfbare Nachweis im dritten Speicherbereich gespeichert und nach Abschluss des Prüfvorgangs gegebenenfalls aus dem dritten Speicherbereich gelöscht.

Ist ein Akteur ein Aussteller mindestens eines überprüfbaren digitalen Nachweises, können Kopien ausgestellter überprüfbarer digitaler Nachweise in einem weiteren Speicherbereich gespeichert sein. Dies ist insbesondere zum Zweck eines Widerrufs überprüfbaren digitalen Nachweises von Vorteil.

In Ausführungsformen liegt mindestens ein überprüfbarer Nachweis mit jeweils mindestens einem symmetrischen Schlüssel verschlüsselt in der ID-Wallet vor.

Der erste Speicherbereich und/oder der zweite Speicherbereich können in Ausführungsformen mittels einem oder mehreren im Register digitaler Nachweise des HSM gespeicherten symmetrischen Schlüssel gespeichert sein.

Die überprüfbaren Nachweise weisen Signaturen ihrer Herausgeber auf.

In Ausführungsformen des Systems ermöglichen überprüfbare digitale Nachweise die Zuordnung von öffentlichen kryptografischen Schlüsseln zu entsprechenden digitalen Identitäten.

In Ausführungsformen des Systems ermöglichen überprüfbare digitale Nachweise Treffen von überprüfbaren Aussagen über Zuordnungen von DIDs zu entsprechenden Akteuren.

In Ausführungsformen des Systems ist das erste Anwendungsprogramm dazu ausgelegt, überprüfbare digitale Nachweise im Speicher der ersten ID-Wallet zu erzeugen, und/oder zu verwalten, wobei die überprüfbaren digitalen Nachweise eine Zuordnung zu einer DID des Ausstellers umfassen.

In Ausführungsformen des Systems ist das erste Anwendungsprogramm dazu ausgelegt, überprüfbare digitale Nachweise im Speicher der ersten ID-Wallet zu signieren, wobei das Anwendungsprogramm des ersten Hardware-Sicherheitsmoduls konfiguriert ist,
- mindestens einen kryptografischen Schlüssel zu erzeugen und/oder zu verwalten, wobei der Schlüssel dazu dient, mindestens einen überprüfbaren digitalen Nachweis in der ersten ID-Wallet zu signieren und/oder zu prüfen
- eine sichere Kommunikation mittels symmetrischer und asymmetrischer Kryptographie zwischen dem ersten Hardware-Sicherheitsmodul und dem zweiten Hardware-Sicherheitsmodul aufzubauen, wobei die Verschlüsselung durch das erste Hardware-Sicherheitsmodul erfolgt.

In Ausführungsformen des Systems ist die erste ID-Wallet dazu ausgelegt, die Integrität solcher vertrauenswürdigen digitalen Nachweise, die einen öffentlichen kryptografischen Schlüssel aufweisen und deren öffentlicher kryptografischer Schlüssel einer im vertrauenswürdigen digitalen Nachweis genannten digitalen Identität zugeordnet ist, kryptografisch zu prüfen, und das System dazu ausgelegt ist, solche vertrauenswürdigen digitale Nachweise in der ersten ID-Wallet zu speichern.

In Ausführungsformen des Systems umfassen überprüfbare digitale Nachweise eine Zuordnung zu einer DID des Inhabers und/oder eine Zuordnung zu einer DID des Prüfers.

Ein Prüfer ist im Sinne der Erfindung ein Akteur, der einen überprüfbaren Nachweis eines Inhabers überprüft, insbesondere auf Authentizität und auf Gültigkeit.

Das Verwalten von überprüfbaren digitalen Nachweisen umfasst insbesondere das Speichern, das Löschen und/oder das Lesen.

In Ausführungsformen des Systems sind die im ersten und/oder zweiten Speicherbereich gespeicherten Wallet digitalen Nachweise dazu ausgelegt, mittels einem der symmetrischen kryptografischen Schlüssel symmetrisch verschlüsselt zu sein.

In Ausführungsformen des Systems ist die erste ID-Wallet dazu ausgelegt, die Integrität solcher der vertrauenswürdigen digitalen Nachweise, die einen öffentlichen kryptografischen Schlüssel aufweisen und deren öffentlicher kryptografischer Schlüssel einer im vertrauenswürdigen digitalen Nachweis genannten digitalen Identität zugeordnet ist, kryptografisch zu prüfen und zu speichern.

In Ausführungsformen des Systems ist der zweite Speicherbereich dazu ausgelegt, digitale Nachweise zu enthalten, welche einen oder mehrere andere im zweiten Speicherbereich enthaltene digitale Nachweise referenzieren.

In Ausführungsformen des Systems ist das Hardware-Sicherheitsmodul dazu eingerichtet, das erste Anwendungsprogramm auszuführen, wobei das erste Anwendungsprogramm dazu ausgelegt ist, die von den überprüfbaren digitalen Nachweisen aufgewiesenen öffentlichen kryptografischen Schlüssel und/oder vorrotierte Schlüssel zu erzeugen und in einem Identitäts-Schlüsselregister des Hardware-Sicherheitsmodul zu speichern, wobei das Hardware-Sicherheitsmodul die Anwendungsprogramm-HSM-Schnittstelle aufweist, die dazu ausgelegt ist, öffentliche kryptografische Schlüssel zu exportieren.

Ein vorrotierter Schlüssel ist ein zur späteren Nutzung vorgesehener Schlüssel, der noch nicht zum Entschlüsseln, Signieren oder Verschlüsseln verwendet wird, jedoch mit einem aktuellen Schlüssel signiert wurde, der zum Signieren und/oder Entschlüsseln und/oder Verschlüsseln verwendet wird.

Bevorzugt wird im Rahmen der Schlüsselvorrotation ein neues öffentlich-privates Schlüsselpaar zur späteren Nutzung erzeugt. Der neu erzeugte, zur späteren Nutzung vorgesehene öffentliche Schlüssel wird mit dem aktuellen privaten Schlüssel signiert. Wenn das alte Schlüsselpaar seine Gültigkeit verliert, kann der Inhaber des neuen Schlüsselpaares sich gegenüber anderen Akteuren durch den mit dem vorherigen privaten Schlüssel signierten neuen öffentlichen Schlüssel authentifizieren.

In Ausführungsformen des Systems ist die ID-Wallet-zu-HSM-Kommunikationsschnittstelle der erste ID-Wallet eine als eine erste HSM-Anwendungsprogramm-Programmierschnittstelle, auch bezeichnet als Application Programming Interface (API) ausgebildet. Die HSM-Anwendungsprogramm-Programmierschnittstelle der ersten ID-Wallet ist dazu ausgelegt, einen Datenaustausch zwischen dem ersten Anwendungsprogramm und der ersten ID-Wallet zu ermöglichen.

In Ausführungsformen des Systems weist das HSM eine Anwendungsprogramm-HSM-Schnittstelle auf. Die ID-Wallet auf dem digitalen Endgerät kommuniziert unter Verwendung der HSM-Anwendungsprogramm-Programmierschnittstelle und des Anwendungsprogramm-HSM-Schnittstelle mit dem Anwendungsprogramm .

In Ausführungsformen des Systems ist das erste Hardware-Sicherheitsmodul dazu ausgelegt, über die erste ID-Wallet, welche dazu ausgelegt ist mit einer von einem zweiten Endgerät aufgewiesenen zweiten ID-Wallet mittels mindestens eines Kommunikationsprotokolls zu kommunizieren, mit dem zweiten, mit der zweiten ID-Wallet verbundenen, Hardware-Sicherheitsmodul zu kommunizieren.

Dieses Kommunikationsprotokoll kann in Ausführungsformen zum Beispiel aber nicht ausschließlich aus den Protokollen DIDComm-V.2 oder OpenlD4VC ausgewählt sein.

In Ausführungsformen des Systems weisen die überprüfbaren digitalen Nachweise jeweils einen DID des Ausstellers auf und
- das erste Anwendungsprogramm ist so konfiguriert, dass es nur dem, vom zweiten Hardware-Sicherheitsmodul aufgewiesenen Anwendungsprogramm ermöglicht ist, Registereinträge von digitalen Nachweisen im Register digitaler Nachweise des ersten Hardware-Sicherheitsmodul zu speichern, wobei diese Registereinträge entweder vom Aussteller direkt kommen und durch das erste Anwendungsprogramm geprüft wird, ob der Eintrag vom ersten Anwendungsprogramm signiert wurde oder die Registereinträge als übertragbar markiert sind und/oder
- können auf einen DID des Inhabers der ersten ID-Wallet ausgestellt sein und das erste Anwendungsprogramm ist konfiguriert, einen Hashwert eines überprüfbaren digitalen Nachweises im Register digitaler Nachweise zu speichern oder zu löschen, wobei die Registereinträge überprüfbarer digitaler Nachweise mindestens eine Zustandsvariable aufweisen, wobei durch einen Zustand der Zustandsvariable bestimmt ist, ob der jeweilige überprüfbare digitale Nachweis kopierbar und/oder durch die erste ID-Wallet auf die zweite ID-Wallet verleihbar und/oder übertragbar ist.

In Ausführungsformen des Systems weisen die überprüfbaren digitalen Nachweise jeweils einen DID des Ausstellers auf und
- das erste Anwendungsprogramm ist so konfiguriert, dass es nur dem, vom zweiten Hardware-Sicherheitsmodul aufgewiesenen Anwendungsprogramm ermöglicht ist, Registereinträge von digitalen Nachweisen im Register digitaler Nachweise des ersten Hardware-Sicherheitsmodul zu speichern, wobei diese Registereinträge entweder vom Aussteller direkt kommen und durch das erste Anwendungsprogramm geprüft wird, ob der Eintrag vom zweiten Anwendungsprogramm signiert wurde oder die Registereinträge als übertragbar markiert sind und/oder
- sind auf einen DID des Inhabers der ersten ID-Wallet ausgestellt
und das erste Anwendungsprogramm ist konfiguriert, einen Hashwert eines überprüfbaren digitalen Nachweises im Register digitaler Nachweise zu speichern oder zu löschen, wobei die Registereinträge überprüfbarer digitaler Nachweise mindestens eine Zustandsvariable aufweisen, wobei durch einen Zustand der Zustandsvariable bestimmt ist, ob der jeweilige überprüfbare digitale Nachweis kopierbar und/oder durch die erste ID-Wallet auf die zweite ID-Wallet verleihbar und/oder übertragbar ist.

In Ausführungsformen des Systems ist das Anwendungsprogramm nicht veränderbar und Daten in einem ersten Teil des Speichers des ersten Hardware-Sicherheitsmodul sind nur mittels des Anwendungsprogramms erzeugbar, änderbar oder löschbar und in einem zweiten Teil des Speichers sind Daten nicht erzeugbar, änderbar oder löschbar.

In Ausführungsformen des Systems weist das Installateurs-Schlüsselregister des ersten Hardware-Sicherheitsmodul mindestens einen ersten nicht auslesbaren geheimen symmetrischen Schlüssel (im Folgenden auch ersten Installateurs-Schlüssel genannt) auf, der dazu ausgelegt ist, mittels eines symmetrischen Verschlüsselungsverfahrens, die Erstellung mindestens eines Kommunikationsschlüssels zur verschlüsselten Kommunikation mit dem zweiten Hardware-Sicherheitsmodul mittels des ersten Endgerätes und des zweiten Endgerätes zu ermöglichen, wobei das zweite Hardware-Sicherheitsmodul ein Installateurs-Schlüsselregister aufweist und das Installateurs-Schlüsselregister des zweiten Hardware-Sicherheitsmodul denselben nicht auslesbaren geheimen symmetrischen Schlüssel aufweist, wie das Installateurs- Schlüsselregister des ersten Hardware-Sicherheitsmoduls. Das symmetrische Verschlüsslungsverfahren ist bevorzugt das Diffie-Hellman-Verfahren.

In Ausführungsformen des Systems weist das Installateurs-Schlüsselregister des ersten Hardware-Sicherheitsmoduls mindestens einen zweiten nicht auslesbaren geheimen symmetrischen Schlüssel auf, der dazu ausgelegt ist, Änderungen durch einen Installateur im Installateurs-Schlüsselregister des ersten Hardware-Sicherheitsmodul durchzuführen.

Der Installateur kann den zweiten nicht auslesbaren geheimen symmetrischen Schlüssel nutzen um eine Zugriffsberechtigung bevorzugt dazu zu erhalten,
- das Anwendungsprogramm zu aktualisieren, zu warten und/oder in anderer Hinsicht zu verändern, sowie
- um Schlüssel auszutauschen.

Dass nur der Installateur im Besitz des zweiten nicht auslesbaren geheimen symmetrischen Schlüssels ist, gewährleistet, dass das HSM operativ nicht manipulierbar ist.

Ein weiterer Aspekt der Erfindung betrifft ein Verfahren zur sicheren Kommunikation zwischen zwei Systemen zur Überprüfung und/oder Übertragung von digitalen Nachweisen, insbesondere von überprüfbaren digitalen Nachweisen, wobei die erste ID-Wallet mit dem ersten Hardware-Sicherheitsmodul in Verbindung steht und die zweite ID-Wallet mit dem zweiten Hardware-Sicherheitsmodul in Verbindung steht, wobei das Anwendungsprogramm des ersten Hardware-Sicherheitsmoduls
- mindestens einen kryptografischen Schlüssel erzeugt und/oder verwaltet, wobei der Schlüssel dazu dient, mindestens einen überprüfbaren digitalen Nachweis in der ersten ID-Wallet zu ver- und/oder entschlüsseln und/oder zu signieren und/oder zu prüfen
- eine sichere Kommunikation mittels asymmetrischer Kryptographie aufbaut wobei die Verschlüsselung durch das erste Hardware-Sicherheitsmodul erfolgt und jedes Hardware-Sicherheitsmodul jegliche Übertragung privater Schlüssel aus dem Schlüsselregister heraus oder in dieses hinein verhindert und
- verhindert, dass das Anwendungsprogramm des ersten Hardware-Sicherheitsmoduls den Inhalt seines eigenen Registers digitaler Nachweise verändert.

In einem bevorzugten Verfahren zur sicheren Kommunikation zwischen zwei Systemen zur Überprüfung und/oder Übertragung von digitalen Nachweisen, insbesondere von überprüfbaren digitalen Nachweisen, steht die erste ID-Wallet mit dem ersten Hardware-Sicherheitsmodul in Verbindung und die zweite ID-Wallet mit dem zweiten Hardware-Sicherheitsmodul in Verbindung, wobei das erste Anwendungsprogramm des ersten Hardware-Sicherheitsmoduls
- mindestens einen kryptografischen Schlüssel erzeugt und/oder verwaltet, wobei der Schlüssel dazu dient, mindestens einen überprüfbaren digitalen Nachweis in der ersten ID-Wallet zu signieren und/oder zu prüfen
- eine sichere Kommunikation mittels symmetrischer und asymmetrischer Kryptographie zwischen dem ersten Hardware-Sicherheitsmodul und dem zweiten Hardware-Sicherheitsmodul aufbaut wobei die Verschlüsselung durch das erste Hardware-Sicherheitsmodul erfolgt und jedes Hardware-Sicherheitsmodul jegliche Übertragung privater Schlüssel aus dem Schlüsselregister heraus oder in dieses hinein verhindert und
- verhindert, dass das Anwendungsprogramm des ersten Hardware-Sicherheitsmoduls sich selbst Inhalte in sein eigenes Register digitaler Nachweise schreibt,
- mindestens einen vorrotierten Schlüssel erzeugt und in einem Identitäts-Schlüsselregister des ersten Hardware-Sicherheitsmodul speichert, wobei das erste Hardware-Sicherheitsmodul die Anwendungsprogramm-HSM-Schnittstelle aufweist, die Anwendungsprogramm-HSM-Schnittstelle öffentliche kryptografische Schlüssel exportiert, wobei das Register digitaler Nachweise Signaturen, mindestens einen DID eines Austellers und Zustandsparameter der im Speicherbereich für digitale Nachweise registrierten digitalen Nachweise aufweist.

Das Verwalten kryptografischer Schlüssel kann das Speichern und/oder das Löschen umfassen.

In Ausführungsformen des Verfahrens ist durch den Zustand mindestens einer Zustandsvariable mindestens eines Registereintrages im Register digitaler Nachweise des ersten Hardware-Sicherheitsmoduls der zu diesem Registereintrag zugeordnete mindestens eine überprüfbare digitale Nachweis im Speicherbereich (350) für digitale Nachweise der ersten ID-Wallet als
- kopierbar oder nicht kopierbar gekennzeichnet, und/der
- an die zweite ID-Wallet übertragbar oder nicht übertragbar gekennzeichnet und/oder
- an die zweite ID-Wallet verleihbar oder nicht übertragbar gekennzeichnet.

In Ausführungsformen des Verfahrens ist durch den Zustand mindestens einer Zustandsvariable mindestens eines Registereintrages im Register digitaler Nachweise des ersten Hardware-Sicherheitsmoduls der zu diesem Registereintrag zugeordnete mindestens eine überprüfbare digitale Nachweis in der ersten ID-Wallet als
- kopierbar oder nicht kopierbar gekennzeichnet, und/der
- an die zweite ID-Wallet übertragbar oder nicht übertragbar gekennzeichnet und/oder
- an die zweite ID-Wallet verleihbar oder nicht übertragbar gekennzeichnet.

In Ausführungsformen des Verfahrens ist der mindestens eine überprüfbare digitale Nachweis im Speicherbereich für digitale Nachweise der ersten ID-Wallet als
- kopierbar oder nicht kopierbar gekennzeichnet, und/der
- an die zweite ID-Wallet übertragbar oder nicht übertragbar gekennzeichnet und/oder
- an die zweite ID-Wallet verleihbar oder nicht übertragbar gekennzeichnet.

In Ausführungsformen weist das Verfahren zur Kommunikation zwischen zwei Systemen die Schritte auf:
- Generieren des einen oder der mehreren geheimen temporären symmetrischen kryptografischen Schlüssel, die zur Verschlüsslung des Informationsaustauschs zwischen dem ersten Hardware-Sicherheitsmodul und dem zweiten Hardware-Sicherheitsmodul ausgebildet sind,
- Generieren, mittels des ersten Anwendungsprogramms, des mindestens einen zur asymmetrischen Verschlüsslung geeigneten Schlüsselpaares als Wurzel einer SSI,
- Generieren und/oder Abspeichern und/oder Löschen und/oder Verwalten, von mindestens einem DID mittels des ersten Anwendungsprogramms unter Verwendung des öffentlichen Schlüssels der SSI,
- Verbinden der mindestens einen SSI in der ID-Wallet mit dem mindestens ersten Hardware-Sicherheitsmodul.

Der Informationsaustausch tritt dabei mittels des mit dem ersten HSM verbundenen ersten Endgerätes und des mit dem ersten Endgerät und mit dem zweiten HSM verbundenen zweiten Endgerätes auf.

In Ausführungsformen des Verfahrens werden die digitalen Nachweise in der ersten ID-Wallet mit einem kryptografischen Schlüssel verschlüsselt abgespeichert.

In Ausführungsformen des Verfahrens wird die Datenausgabe an den Inhaber der ersten ID-Wallet und die Dateneingabe durch den Inhaber der ersten ID-Wallet mittels eines Frontends durchgeführt.

Vorteilhaft kann das Frontend als Benutzerschnittstelle, besonders bevorzugt als grafische Benutzeroberfläche auf dem ersten Endgerät ausgebildet sein.

In Ausführungsformen des Verfahrens werden
- im ersten Speicherbereich für digitale Nachweise auf den Inhaber der ersten ID-Wallet ausgestellte überprüfbare digitale Nachweise gespeichert und/oder
- im zweiten Speicherbereich der ersten ID-Wallet auf vom Inhaber der ersten ID-Wallet als vertrauenswürdig eingestufte Akteure ausgestellte vertrauenswürdige digitalen Nachweise und/oder Nachweisketten gespeichert, wobei die vertrauenswürdigen digitalen Nachweise und/oder die Nachweisketten jeweils wenigstens den ersten öffentlichen kryptografischen Schlüssel aufweisen.

In Ausführungsformen des Verfahrens
- verschlüsselt das auf dem ersten Hardware-Sicherheitsmoduls laufende Anwendungsprogramm mindestens einen digitalen Nachweis mit einem durch die erste ID-Wallet auf Basis eines Zufallswertes generierten symmetrischen Software-Schlüssel,
- wird der so generierte Schlüssel durch das auf dem ersten Hardware-Sicherheitsmodul laufende Anwendungsprogramm verschlüsselt, wobei ein abgeleiteter Schlüssel erzeugt wird aus
   o dem mindestens einen im ersten Identitäts-Schlüsselregister gespeicherten privaten Schlüssel,
   o dem öffentlichen Schlüssel eines in einem, auf dem zweiten Hardware-Sicherheitsmodul vorhandenen zweiten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   o dem Zufallswert,
- überträgt der verschlüsselte digitale Nachweis mit dem unter Zuhilfenahme des abgeleiteten Schlüssels den symmetrischen Software-Schlüssel an das zweite Hardware-Sicherheitsmodul verschlüsselt,
- entnimmt die zweite ID-Wallet den verschlüsselten symmetrischen Software-Schlüssel zusammen mit dem Zufallswert und überträgt den verschlüsselten symmetrischen Software-Schlüssel zusammen mit dem Zufallswert an das zweite Hardware-Sicherheitsmodul,
- erzeugt das zweite Anwendungsprogramm einen symmetrischen Schlüssel, aus
   o dem mindestens einen im zweiten Identitäts-Schlüsselregister gespeicherten privaten Schlüssel,
   o dem öffentlichen Schlüssel des verwendeten, in einem, auf dem ersten Hardware-Sicherheitsmodul vorhandenen ersten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   o dem Zufallswert,
- benutzt das zweite Anwendungsprogramm den so gebildeten symmetrischen Schlüssel, um den symmetrischen Software-Schlüssel zu entschlüsseln und überträgt diesen an die zweite ID-Wallet,
- entschlüsselt die zweite ID-Wallet den digitalen Nachweis mit dem symmetrischen Software-Schlüssel.

In Ausführungsformen des Verfahrens
- verschlüsselt die erste ID-Wallet mindestens einen digitalen Nachweis mit einem durch die erste ID-Wallet auf Basis eines Zufallswertes generierten symmetrischen Software-Schlüssel,
- wird der so generierte Schlüssel durch die erste ID-Wallet verschlüsselt, wobei ein abgeleiteter Schlüssel erzeugt wird aus
   o dem mindestens einen im ersten Identitäts-Schlüsselregister gespeicherten privaten Schlüssel,
   o dem öffentlichen Schlüssel eines in einem, auf dem zweiten Hardware-Sicherheitsmodul vorhandenen zweiten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   ∘ dem Zufallswert,
- überträgt der verschlüsselte digitale Nachweis mit dem unter Zuhilfenahme des abgeleiteten Schlüssels den symmetrischen Software-Schlüssel an die zweite ID-Wallet verschlüsselt,
- entnimmt die zweite ID-Wallet den verschlüsselten symmetrischen Software-Schlüssel zusammen mit dem Zufallswert und überträgt den verschlüsselten symmetrischen Software-Schlüssel zusammen mit dem Zufallswert an das zweite Hardware-Sicherheitsmodul,
- erzeugt die zweite ID-Wallet einen symmetrischen Schlüssel, aus
   o dem mindestens einen im zweiten Identitäts-Schlüsselregister gespeicherten privaten Schlüssel,
   o dem öffentlichen Schlüssel des verwendeten, in einem, auf dem ersten Hardware-Sicherheitsmodul vorhandenen ersten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   o dem Zufallswert,
- benutzt das zweite Anwendungsprogramm den so gebildeten symmetrischen Schlüssel, um den symmetrischen Software-Schlüssel zu entschlüsseln und überträgt diesen an die zweite ID-Wallet,
- entschlüsselt die zweite ID-Wallet den digitalen Nachweis mit dem symmetrischen Software-Schlüssel.

**In Ausführungsformen** des Verfahrens
- verschlüsselt die erste ID-Wallet und/oder das auf dem ersten Hardware-Sicherheitsmoduls laufende Anwendungsprogramm mindestens einen digitalen Nachweis mit einem durch die erste ID-Wallet auf Basis eines Zufallswertes generierten symmetrischen Software-Schlüssel,
- wird der so generierte Schlüssel durch die erste ID-Wallet und/oder durch das auf dem ersten Hardware-Sicherheitsmodul laufende Anwendungsprogramm verschlüsselt, wobei ein abgeleiteter Schlüssel erzeugt wird aus
   o dem mindestens einen im ersten Identitäts-Schlüsselregister gespeicherten privaten Schlüssel,
   o dem öffentlichen Schlüssel eines in einem, auf dem zweiten Hardware-Sicherheitsmodul vorhandenen zweiten Identitäts-Schlüsselregister gespeicherten privaten Schlüssel,
   ∘ dem mindestens ersten nicht auslesbaren geheimen symmetrischen Schlüssel des ersten Installateurs-Schlüsselregisters,
   ∘ dem Zufallswert,
- überträgt die erste ID-Wallet und/oder das erste Hardware-Sicherheitsmodul den mit dem Zufallswert symmetrisch verschlüsselten digitalen Nachweis zusammen mit dem durch den abgeleiteten Schlüssel verschlüsselten symmetrischen Software-Schlüssel an die zweite ID-Wallet und/oder an das zweite Hardware-Sicherheitsmodul,
- entnimmt die zweite ID-Wallet den verschlüsselten symmetrischen Software-Schlüssel zusammen mit dem Zufallswert und überträgt den verschlüsselten symmetrischen Software-Schlüssel zusammen mit dem Zufallswert an das zweite Hardware-Sicherheitsmodul,
- erzeugt die zweite ID-Wallet und/oder das zweite Anwendungsprogramm einen symmetrischen Schlüssel, aus
   o dem mindestens einen im zweiten Identitäts-Schlüsselregister gespeicherten privaten Schlüssel,
   o dem öffentlichen Schlüssel des verwendeten, in einem, auf dem ersten Hardware-Sicherheitsmodul vorhandenen ersten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   o dem Zufallswert,
- benutzt das zweite Anwendungsprogramm den so gebildeten symmetrischen Schlüssel, um den symmetrischen Software-Schlüssel zu entschlüsseln und überträgt diesen an die zweite ID-Wallet,
entschlüsselt die zweite ID-Wallet den digitalen Nachweis mit dem symmetrischen Software-Schlüssel.

Der Zufallswert kann eine zufällig generierte Zeichenfolge sein und auch als Salt bezeichnet werden.

In Ausführungsformen des Verfahrens erzeugt die erste ID-Wallet unter Verwendung des ersten Anwendungsprogramms und der von diesem verwalteten kryptografischen Schlüssel der ersten verwendeten dezentralen Identität überprüfbare digitale Nachweise und/oder verwaltet diese, wobei die überprüfbaren digitalen Nachweise
- eine Zuordnung von öffentlichen kryptografischen Schlüsseln zu einer digitalen Identität umfassen und/oder
- eine überprüfbare Aussage der Zuordnung des DID des Ausstellers zu mindestens einem Akteur treffen.

Das Verwalten kann dabei auch das Abspeichern und/oder Löschen umfassen.

In Ausführungsformen des Verfahrens wird der erste Speicherbereich für die digitalen Nachweise für die auf den Inhaber der ersten ID-Wallet ausgestellte digitalen Nachweise mittels eines der symmetrischen kryptografischen Schlüssel durch das erste Anwendungsprogramm symmetrisch verschlüsselt.

In Ausführungsformen des Verfahrens prüft die erste ID-Wallet die Integrität solcher der vertrauenswürdigen digitalen Nachweise, die einen öffentlichen kryptografischen Schlüssel aufweisen und deren öffentlicher kryptografischer Schlüssel mit einem im vertrauenswürdigen digitalen Nachweis genannten DID in Verbindung steht, kryptografisch, wobei die vertrauenswürdigen digitalen Nachweise als überprüfbare digitale Nachweise ausgelegt sind und das System solche überprüfbare digitale Nachweise in der ersten ID-Wallet speichert.

In Ausführungsformen des Verfahrens werden im ersten Speicherbereich und/oder im zweiten Speicherbereich digitale Nachweise gespeichert, welche einen oder mehrere andere im zweiten Speicherbereich gespeicherte digitale Nachweise referenzieren.

In Ausführungsformen des Verfahrens führt das erste Hardware-Sicherheitsmodul das erste Anwendungsprogramm aus und das erste Anwendungsprogramm erzeugt das der mindestens einen SSI zugehörige, mindestens eine zu einer asymmetrischen Verschlüsslung geeignete Schlüsselpaar und/oder den mindestens einen vorrotierten Schlüssel und speichert das Schlüsselpaar und/oder den vorrotierten Schlüssel im Identitäts-Schlüsselregister des ersten Hardware-Sicherheitsmodul, wobei das Anwendungsprogramm auf dem Hardware-Sicherheitsmodul gespeicherte öffentliche kryptografische Schlüssel mittels der Schnittstelle exportiert.

In Ausführungsformen des Verfahrens führt das erste Hardware-Sicherheitsmodul das erste Anwendungsprogramm aus und das erste Anwendungsprogramm erzeugt das der mindestens einen DID zugehörige, mindestens eine zu einer asymmetrischen Verschlüsslung geeignete Schlüsselpaar und/oder den mindestens einen vorrotierten Schlüssel und speichert das Schlüsselpaar und/oder den vorrotierten Schlüssel im Identitäts-Schlüsselregister des ersten Hardware-Sicherheitsmodul, wobei das Anwendungsprogramm auf dem Hardware-Sicherheitsmodul gespeicherte öffentliche kryptografische Schlüssel mittels der Schnittstelle exportiert.

Das einer DID zugehörige, zu einer asymmetrischen Verschlüsslung geeignete Schlüsselpaar ist einer SSI zugehörig.

In Ausführungsformen des Verfahrens ist die ID-Wallet-HSM-Kommunikationsschnittstelle als eine HSM-Anwendungsprogramm-Programmierschnittstelle ausgebildet ist und kommuniziert die erste ersten ID-Wallet mittels der HSM-Anwendungsprogramm-Programmierschnittstelle mit dem ersten Anwendungsprogramm und führt so einen Datenaustausch zwischen dem ersten Anwendungsprogramm und der ersten ID-Wallet durch.

In Ausführungsformen des Verfahrens kommuniziert die erste ID-Wallet mittels der ID-Wallet-zu-HSM-Kommunikationsschnittstelle über die Anwendungsprogramm-HSM-Schnittstelle mit dem ersten Anwendungsprogramm und ermöglicht so einen Datenaustausch zwischen dem ersten Anwendungsprogramm und der ersten ID-Wallet.

In Ausführungsformen besteht das Register digitaler Nachweise aus einer Folge von Registereinträgen, die wahlfrei durch das Anwendungsprogramm ausgelesen werden kann. Die Anzahl ist durch die Speichergröße des HSM bestimmt. Jeder Registereintrag ist eine Typ-Länge-Wert-Struktur, auch bezeichnet als Tag-Length-Value-Struktur (TLV) und besteht aus:
- einem 256 Bit Credential-Register-Eintrags-Identifikator
- einem 64 Bit Zähler vorzeichenloser Ganzzahlen
- einem 8 Bit boolesches Feld für die Rechteverwaltung für den Inhaber
- r-Wert einer X9.62 ECDSA Signatur des Ausstellers des digitalen Nachweises
- S-Wert der X9.62 ECDSA Signatur

Dabei ist die Kennnummer des Credential-Register-Eintrags (CRE-ID) 32 Byte lang. Die ID wird aus der Signatur des dazugehörigen digitalen Nachweises erzeugt. Um eine einheitliche Länge bei unterschiedlichen Signaturverfahren zu erzeugen wird diese Signatur mit SHA 256 gehasht und als BER OCTET STRING abgelegt. Die Rechteverwaltung des Credentials erfolgt über ein 8-Bit großes boolsches Feld. Die einzelnen Bits werden wie folgt genutzt:
- 0b00000001 kopierbar; das Credential kann vervielfältigt werden
- 0b00000010 verleihbar; das Credential kann verliehen werden; Statusbit *"verliehen"* muss zusätzlich geprüft werden
- 0b00000100 transferierbar; das Credential kann an ein anderes HSM transferiert (gespeichert) werden
- 0b01000000 verliehen (Statusbit)
- 0b10000000 invalide/zur Löschung vorgemerkt (Statusbit)

Die Signatur des Credential-Register-Eintrags wird im HSM des Ausstellers mit dem gleichen privaten Schlüssel erstellt, der auch bei der Signierung des dazugehörigen digitalen Nachweises verwendet wird.

Bei der Präsentation eines Verifiable Credentials als digitales Original unter Verwendung zweier auf dem HSM laufender Anwendungsprogramme erbringt das auf dem HSM des Credential-Inhabers laufende Anwendungsprogramm in Ausführungsformen des Verfahrens durch verschlüsselte Übertragung des Credential-Register-Eintrags dem HSM des Credential-Prüfers den Nachweis über die aktuelle Inhaberschaft des Credentials. Der folgende Ablauf zwischen einem Credential-Inhaber (A) und einem Credential-Prüfer (B) wird dabei durchlaufen:
1.1 (A) sendet eine Einladungsnachricht (z.B. DIDComm-Invitation) und überträgt in dieser ein DID-Dokument mit dem eigenem Public Key (PUK). Alternativ kann auch (B) die Einladungsnachricht senden. In diesem Fall sendet (B) den Present-Proof-Request nachdem (A) die Antwort auf die Einladung gesendet hat.
1.2 (A) empfängt die Antwort auf die Einladung zusammen mit dem Present-Proof-Request. Darin enthalten ist das DID-Document von (B) mit dem Public Key von B sowie einem Zufallswert als *Salt* als Initialvektor für die Generierung eines Sitzungs-Schlüssels.
1.3.1 Dieser wird durch das auf dem HSM von (A) laufende Anwendungsprogramm zu generieren beauftragt, indem die Parameter eigene DID von (A), um die eigene zu verwendende DID zu referenzieren, die DID von (B), der PUK der DID von (B) und eine Referenz des zu verwenden Kryptografie-Algorithmus übertragen werden.
1.3.2 Das auf dem HSM von (A) laufende Anwendungsprogramm erzeugt daraus den abgeleiteten Schlüssel (der). Der abgeleitete Schlüssel wird erzeugt aus dem Private Key der referenzierten DID von (A), dem PUK der DID von (B) und dem ersten Installateursschlüssel (Installateur.symKey). und hält diesen in der Sitzung (nur DIDs und Salt werden übertragen. Das auf dem HSM laufende Anwendungsprogramm bestätigt die Schlüssel-Generierung (ack).
1.4 Die ID-Wallet von A generiert aus dem übertragenen Salt den symmetrischen Software-Schlüssel (ssk) für die Nachrichten-Verschlüsselung.
*1.5.1* Die ID-Wallet von A lässt durch das auf dem HSM von A laufende Anwendungsprogramm den *ssk* mit abgeleitetem Schlüssels (*der*) verschlüsseln → enc(*der*;*ssk*).
1.5.2 Die ID-Wallet von A empfängt den verschlüsselten symmetrischen Software-Schlüssel enc(*der*;*ssk*)
   für jedes zu präsentierende Credential wird folgende Sequenz durchlaufen:
1.6.1 Die ID-Wallet von A sendet an das auf dem HSM von A laufende Anwendungsprogramm einen Auftrag zum Nachweis der Inhaberschaft des Credentials,
1.6.1.1 das Anwendungsprogramm lädt den Credential-Register-Eintrag (CRE) aus dem Credential-Register,
1.6.1.2 das Anwendungsprogramm empfängt den CRE vom Credential-Register.
1.6.2 das Anwendungsprogramm verschlüsselt den CRE mit dem abgeleiteten Schlüssels der.
1.6.3 Die ID-Wallet erzeugt aus dem vom Anwendungsprogramm erhaltenen, verschlüsselt den Credential-Eintrag eine Nachricht (z.B. DIDComm-PresentProof) zur Präsentation des Credentials, lässt diesen vom Anwendungsprogramm unter Verwendung des privaten Schlüssel der verwendeten DID von A signieren und
1.7 verschlüsselt die Nachricht mit dem ssk (enc(der;ssk)) . Jede Nachricht hat einen eigenen Schlüssel.
1.8 Die ID-Wallet von A überträgt die verschlüsselte Nachricht zur Präsentation an die ID-Wallet von B.
2.1.1 Die ID-Wallet von B sendet einen Auftrag zur Schlüsselableitung des abgeleiteten Schlüssels an das auf dem HSM laufende Anwendungsprogramm.
2.1.2 In dem, auf dem HSM von B (des Prüfers) laufenden Anwendungsprogramm erfolgt die Schlüsselableitung des abgeleiteten Schlüssels (der). Dies erfolgt analog zum Schritt wie 1.3.2, nur dass der PUK von DID (A) und der Private Key von DID (B) verwendet werden.
2.2 Die ID-Wallet von B lädt den PUK der DID von A
2.3 Die ID-Wallet von B prüft die Signatur von A über die Präsentation für jedes präsentierte Credential wird folgende Sequenz durchlaufen:
2.4.1 Laden der Issuer Credential Kette aus der Präsentation. Das Issuer-Credential wird vom präsentierten Credential referenziert und dokumentiert die DID und die Legitimation des Ausstellers. Durch die Struktur der Aussteller-Organisation und die Dokumentation von Schlüsselrotationen können mehrere Credentials einander sequenziell referenzieren und eine Kette bilden.
2.4.2 Issuer Credential Kette prüfen:
   1. Prüfen der kryptografische Konsistenz der Kette
   2. Prüfen des Vorhandenseins einer DID der Kette im Speicherbereich für vertrauenswürdige digitale Nachweise der ID-Wallet von B - hierdurch wird die Vertrauenswürdigkeit des Ausstellers ermittelt.
2.4.3 PUK des Ausstellers (PUK.issuer) aus der am Credential anhängenden Issuer Credential Kette laden
2.4.4 Signaturprüfung des präsentierten Credentials unter Verwendung des PUK.issuer
2.4.5.1 den verschlüsselten CRE des Credentials aus der Präsentation entnehmen und an das auf dem HSM laufende Anwendungsprogramm übergeben
2.4.5.2 im HSM von B wird der CRE des Credentials mit dem abgeleiteten Schlüssel (der) entschlüsselt ((der) siehe 2.1.2)
2.4.5.3 Das Anwendungsprogramm prüft die Verkettung des CRE mit dem Credential (Hash(Sig(Cred)) = ID.RegEntry + proof(PUK.issuer;Sig(RegEntry))=true), wobei
   1. Sig(RegEntry) = s-Wert der Signatur
   2. r-Wert(random) = salt
   3. Zähler = max present counter
   4. X9.62 ECDSA Wert der Signatur = Container des r- und s-Wertes
2.4.5.4 Das Anwendungsprogramm wertet das übertragene Boolean Field aus
2.4.5.5 Das Anwendungsprogramm übergibt das Gesamtergebnisses der Prüfungen an die ID-Wallet von B
3 Antwort der ID-Wallet von B an die ID-Wallet von A

Ein DID-Dokument ist ein Datensatz, der den DID beschreibt, einschließlich Mechanismen wie kryptografische öffentliche Schlüssel, die der DID verwenden kann, um sich selbst zu authentifizieren und seine Verbindung mit dem DID nachzuweisen.

Ein weiterer Aspekt der Erfindung betrifft eine Verwendung eines Systems zum sicheren Austausch digitaler Nachweise zwischen zwei Akteuren eines gemeinsamen digitalen ID-Ökosystems und/oder eines Verfahrens zur sicheren Kommunikation zwischen zwei solcher Systeme zur Überprüfung und/oder Übertragung von digitalen Nachweisen, insbesondere von überprüfbaren digitalen Nachweisen, dadurch gekennzeichnet, dass die erste ID-Wallet (300) mit dem ersten Hardware-Sicherheitsmodul (50) in Verbindung steht und die zweite ID-Wallet (300a) mit dem zweiten Hardware-Sicherheitsmodul (50a) in Verbindung steht, zur Ausstellung und/oder Präsentation und/oder Überprüfung von Tickets, Urkunden, Wertmarken, Zugangsberechtigungen und/oder Schuldscheinen, sowie als digitale Währung, wie z.B. digitales Zentralbankgeld (Central Bank Digital Currency, CBDC).

Eine bevorzugten Verwendung eines Systems zum sicheren Austausch digitaler Nachweise zwischen zwei Akteuren eines gemeinsamen digitalen ID-Ökosystems und/oder eines Verfahrens zur sicheren Kommunikation zwischen zwei solcher Systeme zur Überprüfung und/oder Übertragung von digitalen Nachweisen ist zur Ausstellung und/oder Präsentation und/oder Überprüfung von digitalen Nachweisen.

Die digitalen Nachweise sind insbesondere ausgewählt aus Tickets, Urkunden, Wertmarken, Zugangsberechtigungen und/oder Schuldscheinen und/oder digitaler Währung Ein Beispiel für digitale Währung ist digitales Zentralbankgeld (Central Bank Digital Currency, CBDC).

In Ausführungsformen der Verwendung sind die digitalen Nachweise als überprüfbare digitale Nachweise ausgebildet und die erste ID-Wallet steht mit dem ersten Hardware-Sicherheitsmodul in Verbindung und die zweite ID-Wallet steht mit dem zweiten Hardware-Sicherheitsmodul in Verbindung.

Ein weiterer Aspekt der Erfindung betrifft eine Computerprogrammprodukt, welches das erfindungsgemäße Verfahren implementiert..

In Ausführungsformen implementiert das Computerprogrammprodukt die erfindungsgemäße Verwendung.

Dieses Computerprogrammprodukt ist in Ausführungsformen Bestandteil des erfindungsgemäßen Systems. Ein weiterer Aspekt der Erfindung betrifft einen Datenträger oder eine Datenverarbeitungsanlage auf der das Computerprogrammprodukt gespeichert und/oder installiert ist.

In Ausführungsformen ist das erste HSM und/oder das zweite HSM
- eine Chipkarte, ausgewählt aus den Typen acs ACOSJ-DI 95K und/oder Javacard 3.0.4 und aufwärts und/oder
- eine eSIM, ausgewählt aus den Typen NXP EdgeLock SE050 und/oder Javacard 3.0.5 und/oder
- ein USB-C Dongle vom Typ acs ACR39T
- ein USB-A Dongle, ausgewählt aus einer Chipkarten im ID-000-Format vom Typ identiv uTrust-Token Standard und/oder einer Chipkarten im ID-1-Format vom Typ acs ACR39U
- ein Bluetooth-Dongle aufweisend eine Chipkarte im ID-000-Format vom Typ AirID 2 mini In Ausführungsformen ist das erste digitale Endgerät und/oder das zweite digitale Endgerät ein Smartphone, ausgewählt aus den Typen ein Samsung Galaxy A53 und/oder iPhone 14 PRO. Zweckmäßig sind dabei alle im der vorvorherigen Absatz genannten HSM
- untereinander im Sinne der Erfindung kompatibel, sofern das erfindungsgemäße Anwendungsprogramm auf ihnen installiert ist und
- mit den im vorherigen Absatz genannten Smartphones kompatibel, sofern das erfindungsgemäße ID-Wallet auf ihnen installiert ist.

Zweckmäßig sind dabei auch die im vorvorherigen Absatz genannten Smartphones untereinander kompatibel, sofern das erfindungsgemäße ID-Wallet auf ihnen installiert ist.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiele

Nachfolgend soll die Erfindung anhand eines Ausführungsbeispiels eingehender erläutert werden. Das Ausführungsbeispiel bezieht sich auf die Präsentation eines Besitznachweises eines Verifiable Credential durch eine Partei A gegenüber einer Partei B und soll dabei die Erfindung beschreiben ohne diese zu beschränken.

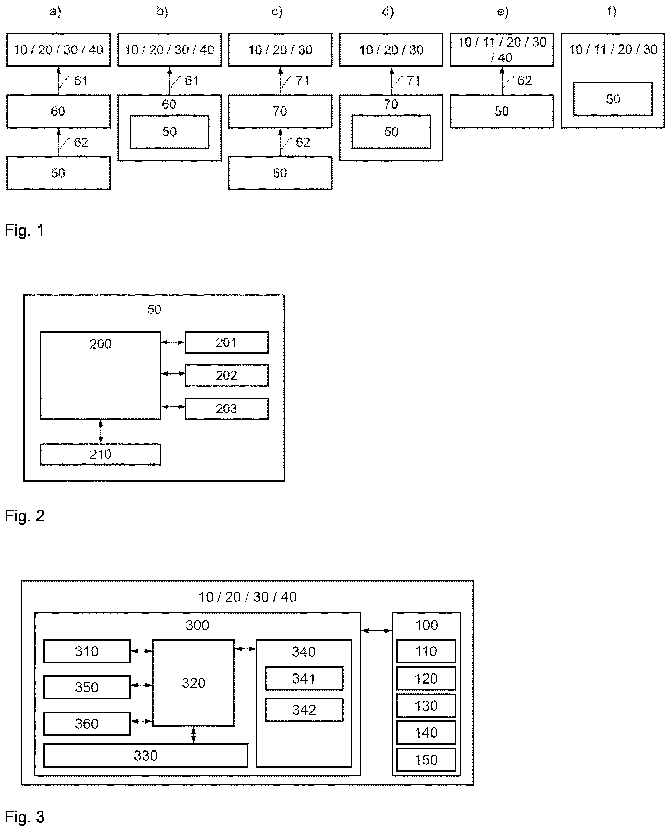

Anhand von Zeichnungen wird die Erfindung näher erläutert. Dabei zeigen
**Fig. 1** eine schematische Darstellung verschiedener Kombinationen von HSM (50), Endgeräten (10 / 20 / 30 / 40) und Verbindungen zwischen HSM und Endgeräten, wobei
   a) ein HSM (50) zeigt, welches mittels einer ISO 7816-3 Verbindung (62) mit einem USB-Chipkartenlesegerät (60) verbunden ist, welches mittels einer USB-Verbindung (61) mit einem digitalen Endgerät verbunden ist,
   b) ein HSM (50) zeigt, welches in einem USB-Chipkartenlesegerät (60) integriert ist, welches mittels einer USB-Verbindung (62) mit einem digitalen Endgerät verbunden ist,
   c) ein HSM (50) zeigt, welches mittels einer ISO 7816-3 Verbindung (62) mit einem Bluetooth-Chipkartenlesegerät (70) verbunden ist, welches mittels einer Bluetooth - Verbindung (71) mit einem digitalen Endgerät verbunden ist
   d) ein HSM (50) zeigt, welches in einem Bluetooth-Chipkartenlesegerät (70) integriert ist, welches mittels einer Bluetooth-Verbindung (71) mit einem digitalen Endgerät verbunden ist,
   e) ein HSM (50) zeigt, welches mittels einer ISO 7816-3 Verbindung (62) mit einem digitalen Endgerät verbunden ist
   f) ein HSM (50) zeigt, welches in einem digitalen Endgerät integriert ist,
**Fig. 2** eine schematische Darstellung eines HSM (50), wobei das HSM das auf dem HSM laufendes Anwendungsprogramm (200) aufweist, welches mit dem Installateurs-Schlüsselregister (201), mit dem Identitäts-Schlüsselregister (202), dem Register digitaler Nachweise (203) und der Anwendungsprogramm-HSM-Schnittstelle (210) verbunden ist,
**Fig. 3** eine schematische Darstellung eines digitalen Endgerätes (10 / 20 / 30 / 40), welches eine ID-Wallet (300) aufweist, wobei die ID-Wallet eine Geschäftsprozesslogik (320) aufwiest, die Geschäftsprozesslogik mit Nutzeroberfläche der ID-Wallet (310), dem Credential Store (350), dem Trusted Credential Store (360), der HSM-Anwendungsprogramm-ProgrammierSchnittstelle (330) und der ID-Wallet-zu-ID-Wallet-Kommunikationsschnittstelle (340) verbunden ist, wobei die Kommunikationsschnittstelle eine DIDComm-Schnittstelle (341) und eine OpenlD4VC-Schnittstelle (342) aufweist und die ID-Wallet mit einer Datentransportschnittstelle (100) verbunden ist, die eine TCP/IP-Verbindung (110), eine Nearby-Share-Verbindung (120), eine Wi-Fi Direct-Verbindung (130), eine AirDrop-Verbindung (140) und eine Bluetooth-Verbindung (150) aufweist,

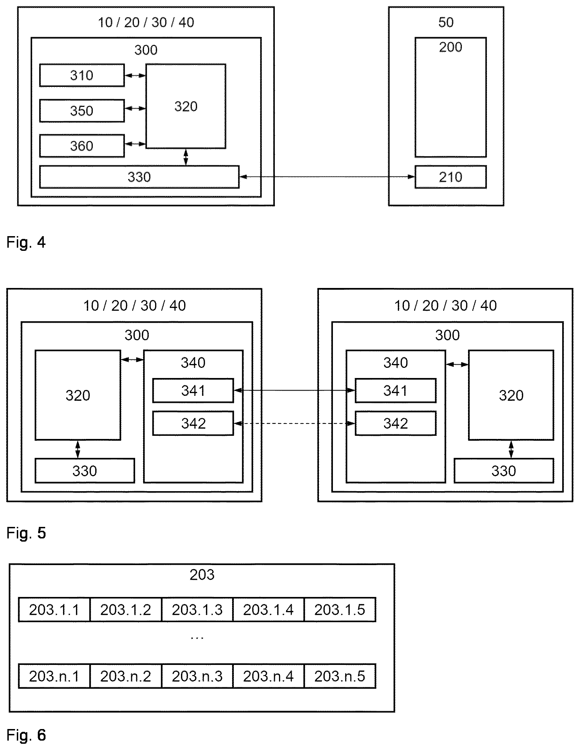

**Fig. 4** eine schematische Darstellung eines digitalen Endgerätes, welches eine ID-Wallet (300) aufweist, wobei die ID-Wallet eine Geschäftsprozesslogik (320) aufwiest, die Geschäftsprozesslogik mit Nutzeroberfläche der ID-Wallet (310), dem Credential Store (350), dem Trusted Credential Store (360) und der HSM-Anwendungsprogramm-Programmier-Schnittstelle (330) verbunden ist und die HSM-Anwendungsprogramm-Programmier-Schnittstelle mittels einer Anwendungsprogramm-HSM-Schnittstelle (210) mit einem außerhalb des Endgerätes befindlichen HSM (50) verbunden ist und das HSM ein Anwendungsprogramm (200) aufweist,
**Fig. 5** zwei mobile Endgeräte, die jeweils eine ID-Wallet (300) aufweisen, wobei die jeweilige ID-Wallet jeweils eine Geschäftsprozesslogik (320) aufwiest, die Geschäftsprozesslogik (320) mit, der HSM-Anwendungsprogramm-Programmierschnittstelle der ID-Wallet (330) und der ID-Wallet-zu-ID-Wallet-Kommunikationsschnittstelle (340) verbunden ist, wobei die Kommunikationsschnittstelle eine DIDComm-Schnittstelle (341) und eine OpenlD4VC-Schnittstelle (342) aufweist und die beiden Endgeräte jeweils mittels der ID-Wallet-zu-ID-Wallet-Kommunikationsschnittstelle (340) miteinander verbunden sind,
**Fig. 6** ein Register digitaler Nachweise (203), welches zwei Registereinträge (203.1 und 203.n) aufweist, die jeweils eine Tag-Length-Value-Struktur aufweisen, und die jeweils aus einer ersten Credential Registry ID (203.x.1) bestehen, einen Zähler (203.x.2), einem Boolesches Feld (203.x.3, einer X9.62 ECDSA Signatur: r-Wert des Signatur (203.x.4) und einem X9.62 ECDSA Signatur: S- Wert des Signatur (203.x.5) bestehen

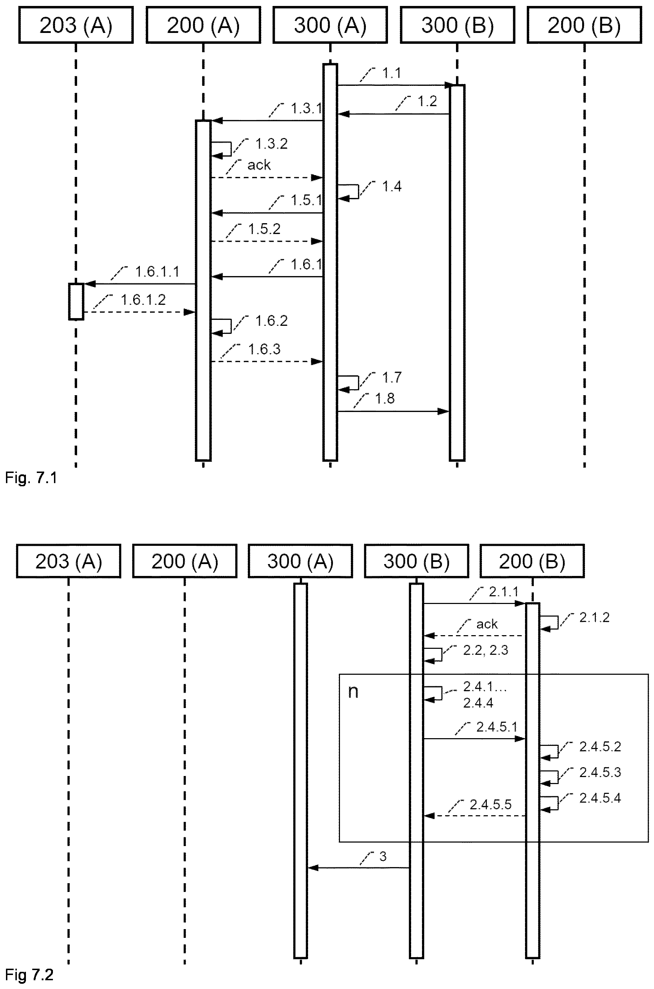

**Fig. 7****.****1** einen ersten Teil einer Präsentation eines im Credential-Register (203 (A)) verankerten Credentials einer Partei A gegenüber einer Partei B mit dem folgenden Ablauf (ausgeführt als UML-Sequenz-Diagramm)
   1.1 (A) sendet eine DIDComm-Einladung und überträgt in dieser ein DID-Dokument mit dem eigenem Public Key (PUK). Alternativ kann auch (B) die DIDComm-Invitation senden. In diesem Fall sendet (B) den Present-Proof-Request nachdem (A) die Antwort auf die DIDComm-Einladung gesendet hat.
   1.2 (A) empfängt die Antwort auf die DIDComm- Einladung zusammen mit dem Present-Proof-Request. Darin enthalten ist das DID-Document von (B) mit dem Public Key von B sowie einem Zufallswert als *Salt* als Initialvektor für die Generierung eiens Sitzungs-Schlüssels.
   1.3.1 Dieser wird durch das auf dem HSM von (A) laufende Anwendungsprogramm aus zu generieren beauftragt indem die Parameter eigene DID von (A), um die eigene zu verwendende DID zu referenzieren, DID von (B), PUK der DID von (B), Referenz des zu verwenden Kryptografie-Algorithmus übertragen.
   1.3.2 Das auf dem HSM von (A) laufende Anwendungsprogrammerzeugt daraus den abgeleiteten Schlüssel (der). Der abgeleitete Schlüssel wird erzeugt aus dem Private Key der referenzierten DID von (A), dem PUK der DID von (B) und dem ersten Installateurschlüssel (Installateur.symKey). und hält diesen in der Sitzung (nur DIDs und Salt werden übertragen. Das auf dem HSM laufende Anwendungsprogramm bestätigt die Schlüssel-Generierung (ack).
   1.4 (A) generiert aus dem übertragenen Salt den symmetrischen Software-Schlüssel (ssk) für DIDComm-Nachrichten-Verschlüsselung
   *1.5.1 ssk* von auf dem HSM laufende Anwendungsprogramm mit abgeleitetem Schlüssels (*der*) verschlüsseln lassen → *enc*(*der;ssk*)
   1.5.2 Empfang des verschlüsselten symmetrischen Software-Schlüssel enc(der,ssk)
      für jedes zu präsentierende Credential wird folgende Sequenz durchlaufen:
   1.6.1 senden eines Auftrags zum Nachweis der Inhaberschaft des Credentials an das auf dem HSM laufende Anwendungsprogramm
   1.6.1.1 laden des Credentials aus dem Credential-Register
   1.6.1.2 empfangen des Credentials vom Credential-Register
   1.6.2 verschlüsseln des Credentials mit dem abgeleiteten Schlüssels (der)
   1.6.3 erzeugen der DIDComm-Nachricht (PresentProof) und
   1.7 enc(*der*;*ssk*) in DIDComm übertragen (jede Nachricht hat eigenen Schlüssel)
   1.8 Präsentation übertragen,
**Fig. 7****.****2** einen zweiten Teil, der Prüfung einer Präsentation eines im Credential-Register (203 (A)) verankerten Credentials einer Partei A gegenüber einer Partei B durch die Partei B mit dem folgenden Ablauf (ausgeführt als UML-Sequenz-Diagramm)
   2.1.1 Auftrag zur Schlüsselableitung des abgeleiteten Schlüssels an das auf dem HSM laufende Anwendungsprogramm senden
   2.1.2 Schlüsselableitung des abgeleiteten Schlüssels *der* im auf dem HSM laufenden Anwendungsprogramm des Prüfers. Dies erfolgt analog zum Schritt wie 1.3.2, nur dass der PUK von DID (A) und der Private Key von DID (B) verwendet werden.
   2.2 PUK des Holders laden
   2.3 Signatur des Holders über die Presentation prüfen.
      Für jedes präsentierte Credential wird folgende Sequenz durchlaufen:
   2.4.1 Laden der Issuer Credential Kette aus der Presentation. Das Issuer-Credential wird vom präsentierten Credential referenziert und dokumentiert DID und Legitimation des Ausstellers. Durch die Struktur der Aussteller-Organisation und die Dokumentation von Schlüsselrotationen können mehrere Credentials einander sequenziell referenzieren und eine Kette bilden.
   2.4.2 Issuer Credential Kette prüfen:
      1. kryptografische Konsistenz der Kette
      2. Vorhandensein einer DID der Kette im eigenen Speicherbereich für vertrauenswürdige digitale Nachweise - hierdurch wird die Vertrauenswürdigkeit des Ausstellers ermittelt.
   2.4.3 PUK des Ausstellers (PUK.issuer) aus der am Credential anhängenden Issuer Credential Kette laden
   2.4.4 Signaturprüfung des präsentierten Credentials
   2.4.5.1 verschlüsselten RegEntry des Credentials aus Presentation entnehmen und an das eigene auf dem HSM laufende Anwendungsprogramm übergeben
   2.4.5.2 im ASM CRE des Credentials mit der entschlüsseln (der siehe 2.1.2)
   2.4.5.3 Prüfen der Verkettung des Credential mit dem Credential (Hash(Sig(Cred)) = ID.RegEntry + proof(PUK.issuer;Sig(RegEntry))=true), wobei
      1. Sig(RegEntry) = s-Wert der Signatur
      2. r-Wert(random) = salt
      3. Zähler = max present counter
      4. X9.62 ECDSA Wert der Signatur = Container des r- und s-Wertes
   2.4.5.4 Auswertung des übertragenen Boolean Field (203.x.3)
   2.4.5.5 Rückgabe des Gesamtergebnisses der Prüfungen an die ID-Wallet (B)
   3 Antwort der ID-Wallet (B) an die ID-Wallet (A) .

Ein Ausführungsbeispiels eines erfindungsgemäßen Systems weist sechs Kategorien von möglichen, nicht kopierbaren überprüfbaren Nachweisen auf:

| nicht kopierbares Verifiable Credential | weitergebbar | nicht weitergebbar |
|---|---|---|
| Aussteller-gebunden | Aussteller-DID im Header des VC, Signatur-gesichert, Flag im Register-Eintrag im Register für digitale Nachweise (203) auf "weiterqebbar" | Aussteller-DID im Header des VC, Signatur-gesichert, Flag im Register-Eintrag im Register für digitale Nachweise (203) auf "nicht weitergebbar" |
| | z.B. nicht Namensgebundene Aktie, Barscheck, digitaler Geldschein oder Konzertticket | z.B. Gruppen-Zugangsberechtigung zu Gebäuden |
| Inhaber-gebunden | Inhaber-DID im Header des VC, Signatur-gesichert, Flag im Register-Eintrag im Register für digitale Nachweise (203) auf "weiterqebbar" | Inhaber-DID im Header des VC, Signatur-gesichert, Flag im Register-Eintrag im Register für digitale Nachweise (203) auf "nicht weitergebbar" |
| | z.B. ausgefüllter Stimmzettel, vom anonymen Wähler auf Wahllokal ausgestellt | z.B. inhabergebundener Zugangstoken zu einem Schließfach |
| Aussteller+Inhaber-gebunden | Aussteller-DID und Inhaber-DID im Header des VC, Signatur-gesichert, Flag im Register-Eintrag im Register für digitale Nachweise (203) auf "weitergebbar" | Aussteller-DID und Inhaber-DID im Header des VC, Signatur-gesichert, Flag im Register-Eintrag im Register für digitale Nachweise (203) auf "nicht weitergebbar" |
| | z.B. Führerschein oder Vollmacht mit Recht zur Untervollmacht, bspw. Vorsorgevollmacht oder Abholberechtigung vom Kindergarten | z.B. ÖPNV-Monatskarte, Delegation Credential oder EM-Tickets |

Ein Ausführungsbeispiel eines Systems zum sicheren Austausch digitaler Nachweise zwischen zwei Akteuren eines gemeinsamen digitalen ID-Ökosystems, weist:
- eine erste acs ACOSJ-DI 95K-Chipkarte (50)
- eine erste ID-Wallet (300)
- ein erstes Samsung Galaxy A53-Smartphone (10), wobei das erste acs ACOSJ-DI 95K-Chipkarte (50) mittels einer DIDComm-Schnittstelle 341 mittels des ersten Samsung Galaxy A53-Smartphone (10) mit der ersten ID-Wallet (300) verbunden ist,
- ein erstes auf der ersten acs ACOSJ-DI 95K-Chipkarte (50) gespeichertes Applet (200), das dazu ausgebildet ist, eine Kommunikation zwischen dem ersten acs ACOSJ-DI 95K- Chipkarte (50) und dem ersten Samsung Galaxy A53-Smartphone **herzustellen,** zu steuern und zu verwalten, sowie Rechenoperationen auf der ersten acs ACOSJ-DI 95K-Chipkarte (50) auszuführen,
   wobei
- die erste acs ACOSJ-DI 95K (50) ein Installateurs-Schlüsselregister (201) zur Speicherung von vier kryptografischen Schlüssel, zur symmetrisch verschlüsselten Kommunikation zwischen dem ersten Hardware-Sicherheitsmodul (50), mittels der ersten ID-Wallet (300) und mindestens einem zweiten, mit mindestens einer zur Kommunikation mit der ersten ID-Wallet (300) geeigneten zweiten ID-Wallet (300) verbundenen zweiten Hardware-Sicherheitsmodul (50a) übertragbarer Information ausgebildeten Schlüsseln aufweist,
- das erste Hardware-Sicherheitsmodul (50) ein Identitäts-Schlüsselregister (202) zur Hinterlegung von einem privaten Schlüssel aufweist,
- die erste acs ACOSJ-DI 95K- Chipkarte (50) ein Register (203) digitaler Nachweise aufweist, wobei das Register (203) digitaler Nachweise dazu geeignet ist, Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise zu umfassen,
- die erste acs ACOSJ-DI 95K- Chipkarte (50) dazu eingerichtet ist,
   o kryptografische Rechenoperationen durchzuführen,
   o mittels des ersten Applets (200) eine selbstbestimmte Identität (SSI) und mindestens ein zur SSI gehöriges, zu einer asymmetrischen Verschlüsslung geeignetes Schlüsselpaar zu erzeugen, abzuspeichern, zu löschen und zu verwalten, wobei das geeignete Schlüsselpaar einen privaten und einen öffentlichen Schlüssel umfasst,
   o einen als dezentralisierten Identifikator (DID) definierter berechneter Hashwert des öffentlichen Schlüssels der SSI, in der ID-Wallet (300) zu verwalten,
- die erste acs ACOSJ-DI 95K (50)
   o jegliche Übertragung privater Schlüssel aus dem Identitäts-Schlüsselregister (202) der ersten acs ACOSJ-DI 95K (50) heraus oder in diesen hinein verhindert und
   o Übertragungen öffentlicher Schlüssel mittels der ID-Wallet-zu-ID-Wallet-Kommunikationsschnittstelle (340) ermöglicht.

Ein Ausführungsbeispiel eines Verfahrens zur sicheren Kommunikation zwischen zwei Systemen zur Überprüfung und Übertragung von digitalen Nachweisen, insbesondere von überprüfbaren digitalen Nachweisen, dadurch gekennzeichnet, dass die erste ID-Wallet (300) mit der ersten Hardware- acs ACOSJ-DI 95K- Chipkarte (50) in Verbindung steht und die zweite ID-Wallet (300a) mit der zweiten acs ACOSJ-DI 95K- Chipkarte (50) in Verbindung steht, wobei das Applet (200) des ersten acs ACOSJ-DI 95K (50)
- Mindestens einen kryptografischen Schlüssel erzeugt und verwaltet, wobei der Schlüssel dazu dient, mindestens einen überprüfbaren digitalen Nachweis in der ersten ID-Wallet (300) zu ver- und entschlüsseln und zu signieren und zu prüfen
- eine sichere Kommunikation mittels asymmetrischer Kryptographie, aufbaut wobei die Verschlüsselung durch die erste acs ACOSJ-DI 95K- Chipkarte (50) erfolgt und jede acs ACOSJ-DI 95K (50) jegliche Übertragung privater Schlüssel aus dem Schlüsselregister heraus oder in dieses hinein verhindert und
- verhindert, dass das Applet (200) der ersten acs ACOSJ-DI 95K- Chipkarte (50) sich selbst Inhalte in sein eigenes Register (203) digitaler Nachweise schreibt.

### Bezugszeichen

- 10: Mobile Recheneinheit Mobiltelefon/Smartphone/Tablet
- 11: Mobile bedienerlose Recheneinheit (Internet-of-Things-Device)
- 20: Mobile Recheneinheit PC
- 30: Stationäre Menschen-bediente Recheneinheit
- 40: Stationäre Recheneinheit zur automatisierten Datenverarbeitung
- 50: Erstes Hardware-Sicherheitsmodul (HSM)
- 50a: Zweites Hardware-Sicherheitsmodul (HSM)
- 60: USB-Chipkartenlesegerät
- 61: USB-Verbindung
- 62: ISO 7816-3 Verbindung
- 70: Bluetooth-Chipkartenlesegerät
- 71: Bluetooth-Verbindung
- 100: Datentransportschnittstelle
- 110: TCP/IP-Verbindung
- 120: Nearby-Share-Verbindung
- 130: Wi-Fi Direct
- 140: AirDrop-Verbindung
- 150: Bluetooth
- 200: Erstes Anwendungsprogramm / Auf erstem HSM installiertes Applet
- 200a: Zweites Anwendungsprogramm / Auf zweitem HSM installiertes Applet
- 201: Installateurs-Schlüsselregister des ersten HSM
- 201a: Installateurs-Schlüsselregister des zweiten HSM
- 202: Identitäts-Schlüsselregister des ersten HSM
- 202a: Identitäts-Schlüsselregister des zweiten HSM
- 203: Register digitaler Nachweise
- 203.x.1: Credential Registry ID
- 203.x.2: Zähler
- 203.x.3: Boolesches Feld
- 203.x.4 X9.62: ECDSA Signatur: r-Wert der Signatur
- 203.x.5 X9.62: ECDSA Signatur: S- Wert der Signatur
- 210: Anwendungsprogramm-HSM-Schnittstelle
- 300: Erste ID-Wallet
- 300a: Zweite ID-Wallet
- 310: Nutzeroberfläche der ID-Wallet
- 320: Geschäftsprozesslogik der ID-Wallet
- 330: ID-Wallet-zu-HSM-Kommunikationsschnittstelle / HSM-Anwendungsprogramm-Programmierschnittstelle der ID-Wallet
- 340: Erste ID-Wallet-zu ID-Wallet-Kommunikationsschnittstelle
- 340a: Zweite ID-Wallet-zu ID-Wallet-Kommunikationsschnittstelle
- 341: DIDComm-Schnittstelle
- 342: OpenlD4VC-Schnittstelle
- 350: Speicherbereich digitaler Nachweise
- 360: Speicherbereich vertrauenswürdiger digitaler Nachweise

## Patentansprüche

1. System zur sicheren Ausstellung, zum sicheren Empfang, zur sicheren Präsentierung und zur sicheren Überprüfung digitaler Nachweise zwischen zwei Akteuren eines gemeinsamen digitalen ID-Ökosystems, mindestens aufweisend:
- mindestens ein erstes, Hardware-Sicherheitsmodul (50), welches so konstruiert ist, dass dessen Funktionen nur durch Nutzung einer Anwendungsprogramm-HSM-Schnittstelle (210) eines ersten Anwendungsprogramms (200) steuerbar sind
- mindestens eine erste ID-Wallet (300), aufweisend mindestens eine zur Kommunikation mit mindestens einer zweiten ID-Wallet (300a) geeigneten ID-Wallet-zu-ID-Wallet-Kommunikationsschnittstelle (340),
- mindestens ein erstes digitales Endgerät (10), auf dem die erste ID-Wallet (300) installiert ist, wobei die erste ID-Wallet (300) mittels einer ID-Wallet-zu-HSM-Kommunikationsschnittstelle (330) mit dem ersten Hardware-Sicherheitsmodul (50) verbunden ist und dazu ausgelegt ist, unter Verwendung der Anwendungsprogramm-HSM-Schnittstelle (210) mit dem ersten Anwendungsprogramm (200) zu kommunizieren,
- mindestens ein erstes auf dem ersten Hardware-Sicherheitsmodul (50) gespeichertes, Anwendungsprogramm (200), das dazu ausgebildet ist, eine Kommunikation zwischen dem ersten Hardware-Sicherheitsmodul (50) und dem ersten digitalen Endgerät (10) herzustellen, zu steuern und zu verwalten, sowie Rechenoperationen auf dem ersten Hardware-Sicherheitsmodul (50) auszuführen,
**dadurch gekennzeichnet, dass**
- das erste Hardware-Sicherheitsmodul (50) mindestens ein Installateurs-Schlüsselregister (201) zur Speicherung von mindestens einem kryptografischen Schlüssel aufweist, der zur symmetrisch verschlüsselten Kommunikation zwischen dem ersten auf dem ersten Hardware-Sicherheitsmodul (50) gespeicherten, Anwendungsprogramm (200) und einem zweiten, auf einem zweiten Hardware-Sicherheitsmodul (50a) gespeicherten Anwendungsprogramm (200a), mittels der ersten ID-Wallet (300) und der mit mindestens einer zur Kommunikation mit der ersten ID-Wallet (300) geeigneten ID-Wallet-zu ID-Wallet-Kommunikationsschnittstelle (340a) ausgestatteten zweiten ID-Wallet (300a) geeignet ist,
- **das erste** Hardware-Sicherheitsmodul (50) mindestens ein Identitäts-Schlüsselregister (202) zur Hinterlegung von mindestens einem privaten Schlüssel aufweist,
- das erste Hardware-Sicherheitsmodul (50) mindestens ein Register (203) digitaler Nachweise aufweist, wobei das Register (203) digitaler Nachweise dazu geeignet ist, Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise zu umfassen,
- das erste Hardware-Sicherheitsmodul (50) dazu eingerichtet ist,
o kryptografische Rechenoperationen durchzuführen,
∘ mittels des ersten Anwendungsprogramms (200) mindestens eine selbstbestimmte Identität (SSI) und mindestens ein zur SSI gehöriges, zu einer asymmetrischen Verschlüsslung geeignetes Schlüsselpaar zu erzeugen, abzuspeichern, zu löschen und/oder zu verwalten, wobei das geeignete Schlüsselpaar einen privaten und einen öffentlichen Schlüssel umfasst,
∘ mindestens einen als dezentralisierten Identifikator (DID) definierten, berechneten Hashwert des öffentlichen Schlüssels der SSI, in der ID-Wallet (300) zu verwalten,
- das erste Hardware-Sicherheitsmodul (50)
o jegliche Übertragung privater Schlüssel aus dem Identitäts-Schlüsselregister (202) des ersten Hardware-Sicherheitsmodul (50) heraus oder in diesen hinein verhindert und
o Übertragungen öffentlicher Schlüssel mittels der Anwendungsprogramm-HSM-Schnittstelle (210) ermöglicht.

2. System nach Anspruch 1, **dadurch gekennzeichnet, dass** die erste ID-Wallet (300) wenigstens einen Speicher aufweist, der dazu geeignet ist, verschlüsselte digitale Nachweise zu enthalten, wobei Schlüssel zur Verschlüsselung der digitalen Nachweise im Hardware-Sicherheitsmodul (50) gespeichert sind und der Speicher
- mindestens einen ersten Speicherbereich (350) für auf den Inhaber der ersten ID-Wallet (300) ausgestellte überprüfbare digitale Nachweise aufweist, sowie
- mindestens einen zweiten Speicherbereich (360) für auf vom Inhaber der ersten ID-Wallet (300) als vertrauenswürdig eingestufte Akteure ausgestellte vertrauenswürdige digitalen Nachweise und/oder Nachweisketten aufweist, wobei die vertrauenswürdigen digitalen Nachweise und/oder die Nachweisketten jeweils wenigstens einen ersten öffentlichen kryptografischen Schlüssel aufweisen.

3. System nach einem der vorhergehenden Ansprüche, **dadurch gekennzeichnet, dass** das erste Anwendungsprogramm (200) dazu ausgelegt ist, überprüfbare digitale Nachweise im Speicher der ersten ID-Wallet (300) zu erzeugen, und/oder zu verwalten, wobei die überprüfbaren digitalen Nachweise eine Zuordnung zu einer DID des Ausstellers umfassen.

4. System nach Anspruch 2 oder 3, **dadurch gekennzeichnet, dass** die erste ID-Wallet (300) dazu ausgelegt ist, die Integrität solcher vertrauenswürdiger digitaler Nachweise, die einen öffentlichen kryptografischen Schlüssel aufweisen und deren öffentlicher kryptografischer Schlüssel einer im vertrauenswürdigen digitalen Nachweis genannten digitalen Identität zugeordnet ist, kryptografisch zu prüfen und zu speichern.

5. System nach einem der Ansprüche 2 bis 4, **dadurch gekennzeichnet, dass** die überprüfbaren digitalen Nachweise jeweils einen DID des Ausstellers aufweisen und
- das erste Anwendungsprogramm (200) so konfiguriert ist, dass es nur dem vom zweiten Hardware-Sicherheitsmodul (50a) aufgewiesenen Anwendungsprogramm (200a) ermöglicht ist, Registereinträge von digitalen Nachweisen im Register (203) digitaler Nachweise des ersten Hardware-Sicherheitsmodul (50) zu speichern, wobei diese Registereinträge entweder vom Aussteller direkt kommen und durch das erste Anwendungsprogramm (200) geprüft wird, ob der Eintrag vom Anwendungsprogramm (200a) signiert wurde oder die Registereinträge als übertragbar markiert sind und/oder
- auf einen DID des Inhabers der ersten ID-Wallet (300) ausgestellt sind und das erste Anwendungsprogramm (200) so konfiguriert ist den Hashwert des überprüfbaren digitalen Nachweises im Register (203) digitaler Nachweise zu speichern oder zu löschen und wobei die Registereinträgen überprüfbarer digitaler Nachweise mindestens eine Zustandsvariable aufweisen, wobei durch einen Zustand der Zustandsvariable bestimmt ist, ob der jeweilige überprüfbare digitale Nachweis kopierbar und/oder durch die erste ID-Wallet (300) auf die zweite ID-Wallet (300a) verleihbar und/oder übertragbar ist.

6. System nach einem der vorhergehenden Ansprüche, **dadurch gekennzeichnet, dass** das Installateurs-Schlüsselregister (201) des ersten Hardware-Sicherheitsmodul (50) mindestens einen ersten nicht auslesbaren geheimen symmetrischen Schlüssel aufweist, der dazu ausgelegt ist, mittels eines symmetrischen Verschlüsselungsverfahrens, die Erstellung mindestens eines Kommunikationsschlüssels zur verschlüsselten Kommunikation mit dem zweiten Hardware-Sicherheitsmodul (50a) zu ermöglichen, wobei das zweite Hardware-Sicherheitsmodul (50a) ein Installateurs-Schlüsselregister (201a) aufweist und das Installateurs-Schlüsselregister (201a) des zweiten Hardware-Sicherheitsmodul (50a) denselben nicht auslesbaren geheimen symmetrischen Schlüssel aufweist.

7. System nach einem der vorhergehenden Ansprüche, **dadurch gekennzeichnet, dass** das Installateurs-Schlüsselregister (201) des ersten Hardware-Sicherheitsmoduls (50) mindestens einen zweiten nicht auslesbaren geheimen symmetrischen Schlüssel aufweist, der dazu ausgelegt ist, Änderungen durch einen Installateur im Installateurs-Schlüsselregister (201) des ersten Hardware-Sicherheitsmodul (50) durchzuführen.

8. Verfahren zur sicheren Kommunikation zwischen zwei Systemen nach einem der vorhergehenden Ansprüche zur Überprüfung und/oder Übertragung von digitalen Nachweisen, insbesondere von überprüfbaren digitalen Nachweisen, **dadurch gekennzeichnet, dass** die erste ID-Wallet (300) mit dem ersten Hardware-Sicherheitsmodul (50) in Verbindung steht und die zweite ID-Wallet (300a) mit dem zweiten Hardware-Sicherheitsmodul (50a) in Verbindung steht, wobei das Anwendungsprogramm (200) des ersten Hardware-Sicherheitsmoduls (50)
- mindestens einen kryptografischen Schlüssel erzeugt und/oder verwaltet, wobei der Schlüssel dazu dient, mindestens einen überprüfbaren digitalen Nachweis in der ersten ID-Wallet (300) zu ver- und/oder entschlüsseln und/oder zu signieren und/oder zu prüfen
- eine sichere Kommunikation mittels asymmetrischer Kryptographie, aufbaut wobei die Verschlüsselung durch das erste Hardware-Sicherheitsmodul (50) erfolgt und jedes Hardware-Sicherheitsmodul (50) jegliche Übertragung privater Schlüssel aus dem Schlüsselregister heraus oder in dieses hinein verhindert und
- verhindert, dass das Anwendungsprogramm (200) des ersten Hardware-Sicherheitsmoduls (50) sich selbst Inhalte in sein eigenes Register (203) digitaler Nachweise schreibt.

9. Verfahren nach Anspruch 8, **dadurch gekennzeichnet, dass** durch den Zustand mindestens einer Zustandsvariable mindestens eines Registereintrages im Register (203) digitaler Nachweise des ersten Hardware-Sicherheitsmoduls (50) der zu diesem Registereintrag zugeordnete überprüfbare digitale Nachweis in der ersten ID-Wallet (300) als
- kopierbar oder nicht kopierbar gekennzeichnet ist, und/der
- **an die zweite** ID-Wallet (300a) übertragbar oder nicht übertragbar gekennzeichnet ist und/oder
- an die zweite ID-Wallet (300a) verleihbar oder nicht verleihbar gekennzeichnet ist.

10. Verfahren nach Anspruch 8 oder 9, **dadurch gekennzeichnet, dass**
- im ersten Speicherbereich für digitale Nachweise (350) auf den Inhaber der ersten ID-Wallet (300) ausgestellte überprüfbare digitale Nachweise gespeichert werden und/oder
- im zweiten Speicherbereich (360) der ersten ID-Wallet (300) auf vom Inhaber der ersten ID-Wallet (300) als vertrauenswürdig eingestufte Akteure ausgestellte vertrauenswürdige digitalen Nachweise und/oder Nachweisketten gespeichert werden, wobei die vertrauenswürdigen digitalen Nachweise und/oder die Nachweisketten jeweils wenigstens den ersten öffentlichen kryptografischen Schlüssel aufweisen.

11. Verfahren nach einem der Ansprüche 8 bis 10, **dadurch gekennzeichnet, dass**
- die erste ID-Wallet (300) und/oder das erste Hardware-Sicherheitsmodul (50) mindestens einen digitalen Nachweis mit einem durch die erste ID-Wallet (300) auf Basis eines Zufallswertes generierten symmetrischen Software-Schlüssel verschlüsselt,
- der so generierte Schlüssel durch die erste ID-Wallet (300) und/oder das erste Hardware-Sicherheitsmodul (50) verschlüsselt wird, wobei ein abgeleiteter Schlüssel erzeugt, wird aus
o dem mindestens einen im ersten Identitäts-Schlüsselregister (202) gespeicherten privaten Schlüssel,
o dem öffentlichen Schlüssel des in einem, auf dem zweiten Hardware-Sicherheitsmodul (50a) vorhandenen zweiten Identitäts-Schlüsselregister (202a) gespeicherten privaten Schlüssel,
o dem mindestens ersten nicht auslesbaren geheimen symmetrischen Schlüssel des ersten Installateurs-Schlüsselregisters (201),
o dem Zufallswert,
- die erste ID-Wallet (300) und/oder das erste Hardware-Sicherheitsmodul (50) den mit dem Zufallswert symmetrisch verschlüsselten digitalen Nachweis zusammen mit dem durch den abgeleiteten Schlüssel verschlüsselten symmetrischen Software-Schlüssel an die zweite ID-Wallet (300a) und/oder an das zweite Hardware-Sicherheitsmodul (50a) überträgt,
- **die zweite** ID-Wallet (300a) den verschlüsselten symmetrischen Software-Schlüssel zusammen mit dem Zufallswert entnimmt und an das zweite Hardware-Sicherheitsmodul (50a) überträgt,
- die zweite ID-Wallet (300a) und/oder das zweite Anwendungsprogramm (200a) einen symmetrischen Schlüssel erzeugt, aus
o dem mindestens einen im zweiten Identitäts-Schlüsselregister (202a) gespeicherten privaten Schlüssel,
o dem öffentlichen Schlüssel des in einem, auf dem ersten Hardware-Sicherheitsmodul (50) vorhandenen ersten Identitäts-Schlüsselregister (202) gespeicherten privaten Schlüssel,
o dem mindestens ersten nicht auslesbaren geheimen symmetrischen Schlüssel des ersten Installateurs-Schlüsselregisters (201),
∘ dem Zufallswert,
- das zweite Anwendungsprogramm (200a) den so gebildeten symmetrischen Schlüssel benutzt, um den symmetrischen Software-Schlüssel zu entschlüsseln und an die zweite ID-Wallet (300a) überträgt
- die zweite ID-Wallet (300a) den digitalen Nachweis mit dem symmetrischen Software-Schlüssel entschlüsselt.

12. Verfahren nach einem der Ansprüche 8 bis 11, **dadurch gekennzeichnet, dass** im ersten Speicherbereich (350) und/oder im zweiten Speicherbereich (360) digitale Nachweise gespeichert werden, welche einen oder mehrere andere im zweiten Speicherbereich (360) gespeicherte digitale Nachweise referenzieren.

13. Verfahren nach einem der Ansprüche 8 bis 12, **dadurch gekennzeichnet, dass** das erste Hardware-Sicherheitsmodul (50) das erste Anwendungsprogramm (200) ausführt und das erste Anwendungsprogramm (200) das der mindestens einen DID zugehörige mindestens eine zu einer asymmetrischen Verschlüsslung geeignete Schlüsselpaar und/oder den vorrotierten Schlüssel erzeugt und im Identitäts-Schlüsselregister (202) des ersten Hardware-Sicherheitsmoduls (200) speichert, wobei das Anwendungsprogramm (200) auf dem Hardware-Sicherheitsmodul gespeicherte öffentliche kryptografische Schlüssel mittels der Schnittstelle exportiert.

14. Verfahren nach einem der Ansprüche 8 bis 13, **dadurch gekennzeichnet, dass** die ID-Wallet-HSM-Kommunikationsschnittstelle (330) als eine HSM-Anwendungsprogramm-Programmierschnittstelle (330) ausgebildet ist und die erste ID-Wallet (300) mittels der HSM-Anwendungsprogramm-Programmierschnittstelle (330) mit dem ersten Anwendungsprogramm (200) kommuniziert und so einen Datenaustausch zwischen dem ersten Anwendungsprogramm (200) und der ersten ID-Wallet (300) ermöglicht.

15. Verwendung eines Systems nach einem der Ansprüche 1 bis 7 und/oder eines Verfahrens nach einem der Ansprüche 8 bis 14 zur Ausstellung und/oder Präsentation und/oder Überprüfung von Tickets, Urkunden, Wertmarken, Schuldscheinen und/oder digitaler Währung.

16. Computerprogrammprodukt, welches ein Verfahren eines der Ansprüche 8 bis 15 implementiert.
